# EUROPÄISCHE PATENTSCHRIFT

(11) **EP 4 138 012 B1**
(45) Veröffentlichungstag und Bekanntmachung des Hinweises auf die Patenterteilung: **18.11.2026**
(21) Anmeldenummer: 22190560.7
(22) Anmeldetag: 16.08.2022
(51) Int. Cl.: G06Q 10/08, G06Q 50/60, G07F 17/12

(54) **VERFAHREN UND VORRICHTUNG ZUM ÜBERMITTELN EINER ZUGANGSINFORMATION AN EINE FACHANLAGE AUF EINE ERSTE KOMMUNIKATIONSART**
METHOD AND APPARATUS FOR COMMUNICATING ACCESS INFORMATION TO A SYSTEM TO A FIRST COMMUNICATION MODE
PROCÉDÉ ET DISPOSITIF DE TRANSMISSION DES INFORMATIONS D'ACCÈS À UN CASIER DANS UN PREMIER MODE DE COMMUNICATION

(30) Priorität: 17.08.2021 DE 102021121374
(43) Veröffentlichungstag der Anmeldung: 22.02.2023
(73) Patentinhaber: Deutsche Post AG, 53113 Bonn (DE)
(72) Erfinder: OBERLÄNDER, Philipp, 53129 Bonn (DE); BAYE, Thomas, 53173 Bonn (DE); DIETRICH, Marko, 50823 Köln (DE)
(74) Vertreter: Cohausz & Florack

(56) Entgegenhaltungen:
- EP-A1- 3 333 810
- EP-A2- 3 171 338

## Beschreibung

### Gebiet

Beispielhafte Ausführungsformen der Erfindung betreffen Verfahren, Vorrichtungen, Systeme und Computerprogramme zum Übermitteln einer Zugangsinformation an eine Fachanlage auf eine erste Kommunikationsart, um Zugang zu einem oder mehreren Fächern der Fachanlage zu erhalten, wobei es sich bei der Fachanlage insbesondere um eine Fachanlage zum Abholen und/oder Einstellen von Sendungen von Zustell- oder Lieferdiensten handelt.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, die in verschiedenen Szenarien nutzbar ist.

Beispielsweise kann sich ein Empfänger Sendungen in die Packstation liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt. Damit der benachrichtigte Empfänger eine für ihn bereitgestellte Sendung aus einem Fach der Fachanlage entnehmen kann, muss die Fachanlage feststellen, dass der Empfänger berechtigt ist, zu einem oder mehreren Fächern der Fachanlage Zugang zu erhalten.

Bei einer Realisierung des oben genannten Szenarios muss der Empfänger beim Nachweis der Berechtigung zum Zugang zu einem Fach oder mehreren Fächern eine ihm funktional als Kundennummer dauerhaft zugeordnete Benutzerkennung, auch Postnummer genannt, und zudem einen temporär gültigen Abholcode in ein Eingabegerät, beispielsweise eine Zifferntastatur, der Packstation eingeben. Der temporär gültige Abholcode, der aus der erwähnten Realisierung der Anmelderin als mTAN (mobile Transaktionsnummer) bekannt, ist der Person zuvor zusammen mit der Benachrichtigung, dass eine oder mehrere Sendungen für ihn in der bezeichneten Packstation zur Abholung bereitstehen, elektronisch übermittelt worden.

In einem anderen Szenario hat ein Empfänger die Sendung zwar zu seiner Adresse bestellt, die Zustellung war allerdings erfolglos, z.B. weil der Empfänger im Moment der Zustellung nicht zu Hause war. Daraufhin kann ein Zusteller eine Benachrichtigungskarte aus Papier hinterlassen oder eine elektronische Benachrichtigungskarte an das Smartphone des Empfängers versenden und die Sendung zur Abholung in eine Packstation einstellen. Die Benachrichtigungskarte enthält dann Informationen, die der Empfänger der Packstation übermitteln muss, sodass die Packstation anhand dieser Informationen feststellen kann, dass der Empfänger berechtigt ist, zu einem oder mehreren Fächern der Fachanlage Zugang zu erhalten.

Das Übermitteln der jeweiligen Information an eine Fachanlage kann dabei grundsätzlich auf unterschiedliche Arten erfolgen. Zum Beispiel kann ein Empfänger den im ersten Szenario erhaltenen Abholcode mittels einer Tastatur oder einem berührungsempfindlichen Bildschirm an der Fachanlage eingeben. Im zweiten Szenario kann die Benachrichtigungskarte beispielsweise einen QR-Code umfassen, der von der Fachanlage gescannt wird. Erschwert wird die Übermittlung allerdings dadurch, dass nicht jede Fachanlage notwendigerweise jede Kommunikationsart unterstützt. Also beispielsweise verfügen manche Fachanlagen über keine Tastatur oder keinen berührungsempfindlichen Bildschirm, wohingegen andere Fachanlagen über keinen Scanner zum Erfassen von QR-Codes verfügen. Bei einer Realisierung der oben genannten Packstation der Anmelderin muss sich daher ein Empfänger, der sich an der Packstation befindet, um eine Sendung abzuholen, zunächst die Packstation ansehen und anhand des Aufbaus der Packstation oder einer Kennzeichnung der Packstation bestimmen, welche Kommunikationsarten diese Packstation unterstützt. Daraufhin wählt der Empfänger beispielsweise in einer App seines Smartphones aus, wie die App z.B. den Abholcode darstellen soll, sodass die Fachanlage ihn erhalten kann (z.B. alphanumerisch zur Eingabe durch den Empfänger an einer Tastatur, QR-Code zum Scannen durch die Fachanlage), oder ob das Smartphone den Abholcode direkt an die Fachanlage übermitteln soll (z.B. via Bluetooth). Beispielhafte Verfahren sind in EP 3 171 338 A2 oder EP 3 333 810 A1 zu finden.

### Zusammenfassung einiger beispielhafter Ausführungsformen der Erfindung

In Bezug auf eine Fachanlage ist es grundsätzlich erstrebenswert, dass diese zuverlässig und effizient feststellen kann, dass ein Benutzer berechtigt ist, zu einem oder mehreren Fächern der Fachanlage Zugang zu erhalten, um anschließend den Zugang zu den entsprechenden Fächern zu gewähren.

In verschiedenen Szenarien kann das bisher bekannte Verfahren allerdings fehleranfällig sein, weil das Bestimmen durch den Benutzer, welche Kommunikationsarten eine Fachanlage unterstützt, unzuverlässig sein kann. Zum Beispiel können manche Benutzer verschiedene Typen von Fachanlagen nicht unterscheiden oder sind unachtsam und wählen eine Kommunikationsart zur Kommunikation mit einer Fachanlage aus, die die Fachanlage nicht unterstützt. Die Fachanlage kann in einer solchen Situation dann beispielsweise nicht feststellen, dass der Benutzer berechtigt ist, zu einem oder mehreren Fächern der Fachanlage Zugang zu erhalten. Das Zusammenspiel zwischen der Fachanlage und dem Gerät eines Benutzers funktioniert daher nicht immer zuverlässig.

Zudem muss im vorbeschriebenen Fall eine fehlgeschlagene Authentisierung eines Benutzers gegenüber einer Fachanlage wiederholt werden, womit sich die Zeit, die die Fachanlage benötigt um festzustellen, dass der Benutzer berechtigt ist, zu einem oder mehreren Fächern der Fachanlage Zugang zu erhalten, deutlich erhöht. Das kann eine Effizienzeinbuße mit sich bringen.

Darüber hinaus ist eine hohe Effizienz des bisher bekannten Verfahrens selbst dann nicht immer gegeben, wenn die Authentisierung beim ersten Mal gelingt. Muss ein Benutzer beispielsweise eine Brille in seiner Tasche suchen, um eine Information von der Fachanlage abzulesen und sie in eine App auf seinem Gerät einzugeben, kann das zeitaufwendig sein.

Die vorliegende Erfindung hat sich daher die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem ersten beispielhaften Aspekt der Erfindung wird ein Verfahren offenbart, das beispielsweise von einer mobilen Vorrichtung, z.B. einem Smartphone oder einem Handscanner, ausgeführt wird, das Verfahren umfassend: Erhalten einer ersten Information von einer Vorrichtung oder einem System, wobei unter Verwendung der ersten Information eine erste Kommunikationsart zur Übermittlung einer Zugangsinformation an eine Fachanlage bestimmbar ist; Bestimmen, unter Verwendung der ersten Information, der ersten Kommunikationsart zur Übermittlung der Zugangsinformation an die Fachanlage; Übermitteln der Zugangsinformation an die Fachanlage auf die erste Kommunikationsart, um Zugang zu einem oder mehreren Fächern der Fachanlage zu erhalten.

Gemäß einem zweiten beispielhaften Aspekt der Erfindung wird ein Verfahren offenbart, das beispielsweise von einer Fachanlage ausgeführt wird, das Verfahren umfassend: Ausgeben einer ersten Information an eine Vorrichtung oder ein System, welche oder welches die erste Information an eine mobile Vorrichtung übermittelt, um der mobilen Vorrichtung zu ermöglichen unter Verwendung der ersten Information eine erste Kommunikationsart zur Übermittlung einer Zugangsinformation an die Fachanlage zu bestimmen; Erhalten der Zugangsinformation auf die erste Kommunikationsart, wobei die erste Kommunikationsart unter Verwendung der ersten Information bestimmt wurde; Feststellen, ob die Zugangsinformation zum Zugang zu einem oder mehreren Fächern der Fachanlage berechtigt; und Gewähren von Zugang zu einem oder mehreren Fächern der Fachanlage, wobei notwendige Bedingung für das Gewähren von Zugang ist, dass festgestellt wurde, dass die Zugangsinformation zum Zugang zu dem einen oder zu den mehreren Fächern der Fachanlage berechtigt.

Gemäß einem dritten beispielhaften Aspekt der Erfindung wird ein Verfahren offenbart, das beispielsweise von einer Vorrichtung, z.B. einem Server, oder einem System, z.B. einem IT-Backend-System, ausgeführt wird, das Verfahren umfassend: Erhalten oder Speichern einer ersten Information, wobei unter Verwendung der ersten Information eine erste Kommunikationsart zur Übermittlung einer Zugangsinformation an eine Fachanlage bestimmbar ist; Übermitteln der ersten Information an eine mobile Vorrichtung, um der mobilen Vorrichtung zu ermöglichen unter Verwendung der ersten Information die erste Kommunikationsart zur Übermittlung der Zugangsinformation an die Fachanlage zu bestimmen.

Gemäß jedem der vorgenannten Aspekte der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung oder ein System aus zwei, drei oder mehr Vorrichtungen, die Vorrichtung bzw. das System eingerichtet zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein. Eine Vorrichtung gemäß dem ersten Aspekt der Erfindung kann beispielsweise eine mobile Vorrichtung sein, beispielsweise ein Smartphone, z.B. eines Empfängers, oder ein Handscanner, z.B. eines Lieferanten oder Zustellers. Eine Vorrichtung gemäß dem dritten Aspekt der Erfindung kann aber beispielsweise auch ein Laptop oder ein anderes elektronisches Gerät sein. Eine Vorrichtung gemäß dem zweiten Aspekt der Erfindung kann beispielsweise eine Fachanlage sein. Eine Vorrichtung gemäß dem dritten Aspekt der Erfindung kann beispielsweise ein Server sein. Dabei kann unter einem Server beispielsweise auch ein Teil eines Servers wie eine logische oder funktionale Einheit verstanden werden. Unter einem Server ist daher insbesondere auch ein System aus mehreren Vorrichtungen zu verstehen, die gemeinsam eine Serverfunktion bereitstellen, beispielsweise eine Servercloud. In beispielhaften Ausführungsformen kann jede der vorbeschriebenen Vorrichtungen zur Ausführung und/oder Steuerung des Verfahrens gemäß dem jeweiligen Aspekt der Erfindung mit einer oder mehreren weiteren Vorrichtungen zusammenarbeiten. Eine Vorrichtung, die das Verfahren gemäß dem ersten Aspekt der Erfindung ausführt und/oder steuert, kann das beispielsweise mit Unterstützung von oder in Zusammenarbeit mit einer weiteren Vorrichtung tun, beispielsweise einem Server, der (Zwischen)Schritte des Verfahrens ausführt. Das Gleiche gilt entsprechend für Vorrichtungen, die Verfahren nach einem jeweiligen anderen Aspekt der Erfindung ausführen.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Die verschiedenen beispielhaften Aspekte der vorliegenden Erfindung können u.a. die nachfolgend beschriebenen Eigenschaften aufweisen.

Die Fachanlage umfasst eine Vielzahl von Fächern (also beispielsweise mehr als ein Fach oder mehr als zwei Fächer). Die Fächer sind beispielsweise zur Aufnahme von Sendungen (z.B. Briefe, Pakete, Päckchen), Lieferungen (z.B. gereinigte oder zu reinigende Wäsche, Gerichte von Lieferdiensten (z.B. eines Pizza- oder Sushi-Services), etc.) oder Gegenständen (z.B. Wertgegenstände, Gepäck, etc.) eingerichtet Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage oder kombinierte Brief- und Paketfachanlage ausgebildet sein.

Jedes der Fächer ist beispielsweise mit einem jeweiligen Schloss versehen, um den Zugang von Benutzern zu den einzelnen Fächern der Fachanlage kontrollieren zu können. Das Schloss eines Fachs kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielweise ein Riegel in eine Öffnung der Tür eingeführt bzw. wieder herausgezogen wird. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Ein Fach der Fachanlage kann entweder offen oder geschlossen sein. Im offenen Zustand des Fachs ist das Schloss des Fachs entriegelt Die Tür des Fachs kann dann beispielsweise ohne Gewaltanwendung durch eine Person geöffnet werden oder steht offen. Im geschlossenen Zustand des Fachs ist das Schloss des Fachs hingegen verriegelt. Die Tür des Fachs kann dann beispielsweise nicht mehr ohne Gewaltanwendung durch eine Person geöffnet werden, die nicht zur Öffnung berechtigt ist.

Das Schloss eines jeweiligen Fachs ist beispielsweise steuerbar, insbesondere in elektronischer Form. Insbesondere kann zumindest der Prozess der Verriegelns und/oder Entriegelns des Schlosses gesteuert werden. Die Steuerung des Schlosses eines Fachs kann beispielsweise durch eine Schlosssteuereinheit erfolgen, wobei entweder jedem Schloss eine eigene Schlosssteuereinheit zugeordnet ist, oder eine (beispielsweise zentrale) Schlosssteuereinheit einige (z.B. diejenigen eines Moduls der Fachanlage) oder alle Schlösser der Fachanlage steuert. In ersterem Fall werden mehrere Schlosssteuereinheiten, beispielsweise alle Schlosssteuereinheiten oder diejenigen eines oder mehrerer Module der Fachanlage, beispielsweise durch eine übergeordnete Steuereinheit gesteuert, während in letzterem Fall beispielsweise eine jeweilige Verdrahtung zwischen der Schlosssteuereinheit und jedem der von ihr gesteuerten Schlösser besteht, wobei über eine jeweilige Verdrahtung übertragene Signale oder angelegte Spannungen dann nur jeweils dem Schloss zugeordnet sind, zu dem die Verdrahtung führt, aber nicht anderen Schlössern. Alternativ ist auch die Verwendung eines Busses denkbar, an dem sowohl die Schlosssteuereinheit als auch eine Vielzahl von Schlössern elektrisch angebunden sind. Dann ist allerdings in jedem Schloss eine Einheit zur Auswertung der über den Bus erhaltenen Steuersignale erforderlich, was die Schlösser komplexer und damit teurer gestaltet als im Falle der direkten Verdrahtung.

Eine Schlosssteuereinheit (insbesondere die zentrale Schlosssteuereinheit) kann beispielsweise nicht nur die Ansteuerung des Schlosses bzw. der Schlösser besorgen, sondern auch feststellen, ob eine erhaltene Zugangsinformation zum Zugang zu einem Fach oder mehreren Fächern der Fachanlage berechtigt, und dementsprechend Zugang zu dem Fach oder den Fächern gewähren (z.B. durch Entriegelung der Tür des Fachs oder der Türen der Fächer) oder verweigern (z.B. indem keine Entriegelung der Tür des Fachs oder der Türen der Fächer erfolgt).

Der Erhalt der Zugangsinformation erfolgt dabei im Verfahren gemäß dem zweiten Aspekt der Erfindung auf eine erste Kommunikationsart Diese erste Kommunikationsart wurde beispielsweise zuvor von einer mobilen Vorrichtung, die das Verfahren gemäß dem ersten Aspekt der Erfindung ausführt, unter Verwendung einer ersten Information bestimmt Dabei erhält z.B. die mobile Vorrichtung die erste Information von einer Vorrichtung oder einem System, welche oder welches das Verfahren gemäß dem dritten Aspekt ausführt. Die Vorrichtung oder das System wiederum kann die erste Information beispielsweise zuvor von der Fachanlage erhalten haben. Im Detail kann sich das wie nachfolgend beschrieben gestalten.

Das Verfahren gemäß dem zweiten beispielhaften Aspekt umfasst ein Ausgeben einer ersten Information, z.B. von einer Fachanlage, an eine Vorrichtung oder ein System, welche oder welches die erste Information an eine mobile Vorrichtung übermittelt, um der mobilen Vorrichtung zu ermöglichen unter Verwendung der ersten Information eine erste Kommunikationsart zur Übermittlung einer Zugangsinformation an die Fachanlage zu bestimmen. Das Ausgeben kann dabei über eine Internet-Verbindung oder eine Funk-Verbindung wie Bluetooth, NFC, WLAN, 4G oder 5G erfolgen. Das Ausgeben kann zudem beispielsweise in Reaktion auf eine Anfrage z.B. der Vorrichtung oder des System erfolgen. Alternativ oder zusätzlich kann die Ausgabe kann beispielsweise nur einmalig z.B. beim Verbinden der Fachanlage mit einem Netzwerk und/oder nach jeder Änderung der Konfiguration der Fachanlage erfolgen. Auch eine Ausgabe nach jeweils vorbestimmten Zeitabständen ist möglich.

Das Verfahren gemäß dem dritten beispielhaften Aspekt umfasst, insbesondere als Gegenstück zum vorbeschriebenen Ausgeben, das Erhalten oder Speichern der ersten Information, wobei unter Verwendung der ersten Information eine erste Kommunikationsart zur Übermittlung einer Zugangsinformation an eine Fachanlage bestimmbar ist. Das "oder" ist dabei als "und" oder "entweder ... oder" zu verstehen. Das Erhalten kann dabei analog zum Ausgeben der ersten Information erfolgen, d.h. auf die dort beschriebenen Art und Weisen. Die erste Information kann aber beispielsweise auch dadurch erhalten werden, dass eine Eingabe z.B. eines Benutzers an einer Tastatur oder an einem berührungsempfindlichen Bildschirm erfasst wird. Zusätzlich oder alternativ kann die erste Information auch z.B. durch das Scannen eines optischen Musters, z.B. eines Bar- oder QR-Codes, erhalten werden. Das Speichern kann beispielsweise lokal auf einer Festplatte erfolgen, z.B. dauerhaft Die erste Information kann aber auch z.B. in einer Cloud oder anderweitig verteilt gespeichert werden.

Eine Vorrichtung oder ein System, welches oder welche das Verfahren gemäß dem dritten Aspekt der Erfindung ausführt, kann zudem beispielsweise eine Vielzahl von ersten Informationen erhalten und/oder speichern. Erste Informationen der Vielzahl von ersten Informationen können dann beispielsweise mit unterschiedlichen Fachanlagen assoziiert sein. Insbesondere ist beispielsweise unter Verwendung einer jeweiligen gespeicherten ersten Information der Vielzahl von gespeicherten ersten Informationen jeweils eine erste Kommunikationsart zur Übermittlung einer jeweiligen Zugangsinformation an eine jeweilige Fachanlage bestimmbar.

Neben dem Erhalten oder Speichern der ersten Information umfasst das Verfahren gemäß dem dritten beispielhaften Aspekt das Übermitteln der ersten Information an eine mobile Vorrichtung, um der mobilen Vorrichtung zu ermöglichen unter Verwendung der ersten Information die erste Kommunikationsart zur Übermittlung der Zugangsinformation an die Fachanlage zu bestimmen. Das Übermitteln kann dabei beispielsweise direkt oder indirekt über eine Internet-Verbindung oder eine Funk-Verbindung wie Bluetooth, NFC, WLAN, 4G oder 5G erfolgen. Wie alle in dieser Anmeldung beschriebenen Übermittlungen kann auch diese Übermittlung z.B. verschlüsselt erfolgen. Das Erhalten der ersten Information kann in manchen Ausführungsformen ein Auslöser für das Übermitteln der ersten Information an die mobile Vorrichtung sein. In anderen Ausführungsformen kann der Erhalt einer Anfrage zum Übermitteln der ersten Information ein Auslöser für das Übermitteln der ersten Information an die mobile Vorrichtung sein. Das Format der ersten Information beim Übermitteln ist in manchen Ausführungsformen wie das Format beim Erhalten oder Speichern. In anderen Ausführungsformen kann die erste Information in einem anderen Format und/oder anderer Gestalt übermittelt werden, als sie erhalten wurde oder gespeichert ist.

Das Verfahren gemäß dem ersten Aspekt der Erfindung umfasst, insbesondere als Gegenstück zum vorbeschriebenen Übermitteln der ersten Information, ein Erhalten der ersten Information von einer bzw. der Vorrichtung oder einem bzw. dem System. Dabei ist unter Verwendung der ersten Information eine erste Kommunikationsart zur Übermittlung einer Zugangsinformation an eine Fachanlage bestimmbar. Die Vorrichtung oder das System, von der die erste Information erhalten wird, ist jedoch beispielsweise nicht die Fachanlage.

Das Verfahren gemäß dem ersten Aspekt der Erfindung umfasst ferner, beispielsweise ausgelöst durch das Erhalten der ersten Information, ein Bestimmen, unter Verwendung der ersten Information, der ersten Kommunikationsart zur Übermittlung der Zugangsinformation an die Fachanlage und ein Übermitteln der Zugangsinformation an die Fachanlage auf die erste Kommunikationsart, um Zugang zu einem oder mehreren Fächern der Fachanlage zu erhalten. Ein anderer Auslöser für das Bestimmen kann beispielsweise eine Benutzereingabe oder eine vorbestimmte Bedienung der mobilen Vorrichtung sein. Das Bestimmen kann zudem unter Verwendung weiterer Informationen geschehen. Beispielsweise kann eine Beschaffenheit der Vorrichtung, die das Bestimmen ausführt, berücksichtigt werden. Ferner können z.B. auch Benutzereingaben verwendet werden.

Durch die Verfahren gemäß den verschiedenen Aspekten der Erfindung kann in manchen Ausführungsformen erreicht werden, dass eine Zugangsinformation, z.B. von einer mobilen Vorrichtung, auf eine, z.B. zuvor, bestimmte Kommunikationsart übermittelt wird, ohne dass ein Benutzer eine dafür notwendige Information an der mobilen Vorrichtung und/oder der Fachanlage eingeben muss.

Das Bestimmen der ersten Kommunikationsart kann gemäß einer beispielhaften Ausführungsform aller Aspekte der Erfindung das Auswählen der ersten Kommunikationsart aus einer Vielzahl von Kommunikationsarten umfassen. Insbesondere kann eine mobile Vorrichtung, die das Verfahren gemäß dem ersten Aspekt ausführt, dazu eingerichtet sein, die erste Information auf eine oder mehrere (oder alle) Kommunikationsarten der Vielzahl von Kommunikationsarten an eine Fachanlage zu übermitteln.

Das Verfahren gemäß dem zweiten Aspekt der Erfindung, beispielsweise ausgeführt von der Fachanlage, umfasst das Erhalten der Zugangsinformation auf die erste Kommunikationsart, wobei die erste Kommunikationsart unter Verwendung der ersten Information bestimmt wurde, z.B. wie oben beschrieben. Das Erhalten der Zugangsinformation kann dabei beispielsweise der Auslöser dafür sein, dass die weiteren Schritte des Verfahrens gemäß dem zweiten Aspekt der Erfindung, d.h. ein Feststellen, ob die Zugangsinformation zum Zugang zu einem oder mehreren Fächern der Fachanlage berechtigt und ein Gewähren von Zugang zu einem oder mehreren Fächern der Fachanlage, wobei notwendige Bedingung für das Gewähren von Zugang ist, dass festgestellt wurde, dass die Zugangsinformation zum Zugang zu dem einen oder zu den mehreren Fächern der Fachanlage berechtigt, ausgeführt werden. Beim Gewähren von Zugang zur Fachanlage oder zu einem oder mehreren Fächern der Fachanlage kann beispielsweise das Fach oder die mehreren Fächer der Fachanlage geöffnet werden und/oder die jeweiligen Türen der Fächer können entriegelt werden. Dafür ist es jedoch notwendige Bedingung, dass festgestellt wurde, dass die Zugangsinformation zum Zugang zur Fachanlage oder zum Zugang zu dem einen oder zu den mehreren Fächern der Fachanlage, die geöffnet oder entriegelt werden sollen, berechtigt Insbesondere wird beispielsweise zu keinem Fach Zugang gewährt, wenn nicht festgestellt wurde oder werden konnte, dass die Zugangsinformation zum Zugang zu dem einen oder zu den mehreren Fächern der Fachanlage berechtigt, oder wenn festgestellt wurde, dass die Zugangsinformation nicht zum Zugang zu dem einen oder zu den mehreren Fächern der Fachanlage berechtigt. Beim Gewähren von Zugang zu einem oder mehreren Fächern der Fachanlage kann beispielsweise auch grundsätzlich der Zugang zu jenen Fächern der Fachanlage, die keine Fächer sind, für die festgestellt wurde, dass die Zugangsinformation zum Zugang zu ihnen berechtigt, verweigert werden. Jene Fächer werden dann beispielsweise nicht geöffnet und/oder deren jeweilige Türen nicht entriegelt.

Eine Zugangsinformation kann vielfältig ausgeprägt sein. Es kann sich beispielsweise um Buchstaben, Zahlen, Symbole, Muster, Bitfolgen o.ä. handeln. Auch eine Kombination der vorgenannten Formate ist möglich. Eine beispielhafte Zugangsinformation könnte 5, 8, 9, 10, 20, 50, eine Anzahl zwischen den genannten Werten, oder mehr oder weniger alphanumerischen Zeichen umfassen oder daraus bestehen. Insbesondere kann es sich bei einer Zugangsinformation z.B. um ein Kennwort handeln, z.B. ein von einem Benutzer oder einer Vorrichtung, z.B. zufällig, gewähltes Kennwort Eine Zugangsinformation kann außerdem oder stattdessen auch eine Benutzerkennung enthalten, beispielsweise einen Kundennummer, Personalien, einen persönlichen kryptografischen Schlüssel oder eine ähnliche, z.B. einem Benutzer eindeutig zuordenbare, Information. Zusätzlich oder alternativ kann die Zugangsinformation mit einem oder mehreren Fächern einer Fachanlage assoziiert sein, beispielsweise indem sie zum Zugang zu diesen Fächern der Fachanlage berechtigt Eine Zugangsinformation kann unter anderem grafisch darstellbar, lesbar für Menschen und/oder Maschinen und/oder elektronisch und/oder per Funk übermittelbar sein, um nur einige Beispiele zu nennen.

Beispielhafte Ausführungsformen und weitere Vorteile der beispielhaften Aspekte der Erfindung werden nachfolgend beschrieben, wobei deren Offenbarung jeweils für alle drei Aspekte der Erfindung gleichermaßen gelten soll.

Gemäß einer beispielhaften Ausführungsform aller Aspekte der Erfindung kann die erste Kommunikationsart eine der nachfolgend beschriebenen Kommunikationsarten (i)-(iv) sein. Dabei kann die erste Kommunikationsart jedoch auch eine andere, hier nicht beschriebene Kommunikationsart sein.

Kommunikationsart (i) ist eine Übermittlung mittels einer Funkverbindung, insbesondere Bluetooth oder NFC oder einer anderen Nahbereichsfunktechnologie. Andere Funkverbindungen sind aber beispielsweise ebenso möglich, z.B. eine Übertragung gemäß einem sogenannten Wi-Fi (IEEE 802.11)-Standard oder einem anderen Standard.

Kommunikationsart (ii) ist eine Übermittlung mittels eines optischen Musters, welches auf einem Bildschirm der mobilen Vorrichtung angezeigt wird zur Erfassung durch eine Erfassungseinheit der Fachanlage. Das optische Muster kann beispielsweise ein QR- oder Barcode sein, aber auch andere Muster sind möglich. Die Erfassungseinheit kann beispielsweise ein Scanner zum Scannen entsprechender Muster sein.

Kommunikationsart (iii) ist eine Übermittlung mittels Anzeige der Zugangsinformation auf einem Bildschirm der mobilen Vorrichtung zur visuellen Erfassung durch eine Person, die die Zugangsinformation dann an einer Eingabeeinheit der Fachanlage, insbesondere einer Tastatur oder einem berührungsempfindlichen Bildschirm, eingibt. Die Zugangsinformation kann dabei beispielsweise als alphanumerische Zeichenfolge auf dem Bildschirm der mobilen Vorrichtung angezeigt werden.

Kommunikationsart (iv) ist eine akustische Übermittlung. Eine solche akustische Übermittlung kann beispielsweise erfolgen, indem eine Vorrichtung oder Person die Zugangsinformation vorliest und die Fachanlage die Zugangsinformation mittels Spracherkennung erfasst Die Fachanlage kann dazu eine entsprechende Erfassungseinheit aufweisen.

Umfasst das Bestimmen der ersten Kommunikationsart gemäß einer beispielhaften Ausführungsform verschiedener Aspekte der Erfindung das Auswählen der ersten Kommunikationsart aus einer Vielzahl von Kommunikationsarten, kann die Vielzahl von Kommunikationsarten gemäß einer beispielhaften Ausführungsform aller Aspekte der Erfindung eine oder mehrere (z.B. (i)-(ii), (i)-(iii), (i)-(iv), (ii)-(iii) oder eine andere Auswahl) der Kommunikationsarten (i)-(iv) umfassen.

Eine Kommunikationsart kann dabei beispielsweise erfordern, dass eine Vorrichtung und/oder ein Benutzer sich zur Übermittlung von Zugangsinformationen in der Nähe der erfassenden oder erhaltenden Fachanlage befinden muss (also z.B. in einer Entfernung von weniger als einer Armlänge, 1 m, 5 m, 10 m, 50 m, 1 km, innerhalb derselben Funkzelle, in Reichweite einer Nahbereichs-Funkverbindung, z.B. NFC- oder WLAN- oder Bluetooth-Verbindung, oder in Sichtweite). Zusätzlich oder alternativ kann eine Kommunikationsart mit sich bringen, dass eine Information nur in einer vorbestimmten, z.B. maximalen, Geschwindigkeit übermittelt bzw. erhalten werden kann. Das gilt insbesondere für die oben beschriebenen Kommunikationsarten (i)-(iv).

Eine beispielhafte Begrenzung der maximalen und/oder erreichbaren Geschwindigkeit der Übermittlung/des Erhaltens einer Zugangsinformation kann unter Sicherheitsaspekten vorteilhaft sein. Denn ein Angreifer kann beispielsweise versuchen, z.B. im Rahmen einer Brute-Force-Attacke, eine Vielzahl von Zugangsinformation an eine Fachanlage zu senden, um zu testen, ob ein oder mehrere dieser Zugangsinformationen zum Zugang zur Fachanlage oder zu einem oder mehreren Fächern der Fachanlage berechtigen (er versucht also zum Zugang berechtigende Zugangsinformationen zu erraten). Indem beispielsweise die maximale und/oder praktisch erreichbare Geschwindigkeit der Übermittlung/des Erhaltens von Zugangsinformationen begrenzt ist, kann sich die Zeit steigern, die pro Zugangsinformation zur Übermittlung benötigt wird. Ein Angriff, der darauf basiert, dass möglichst viele Zugangsinformationen übermittelt werden (der Angreifer also möglichst viele Rateversuche machen möchte), kann dann also länger dauern, als wenn die Zugangsinformation schneller übermittelt werden könnten. Eine Zugangsinformation ist aber beispielsweise nur eine begrenzte Zeit gültig. Je langsamer die Übertragung von Zugangsinformation ist, desto weniger Zugangsinformationen kann ein Angreifer in dieser begrenzten Zeit ausprobieren. Damit kann die Wahrscheinlichkeit sinken, dass ein Angreifer zufällig eine Zugangsinformation an eine Fachanlage übermittelt, die tatsächlich zum Zugang berechtigt (also zufällig richtig rät). Auch das beispielhafte Erfordernis, dass eine Vorrichtung und/oder ein Benutzer sich zum Übermitteln der Zugangsinformation an eine Fachanlage in physikalischer Nähe der Fachanlage befinden muss, kann beispielsweise die Sicherheit der Fachanlage erhöhen, indem die Fachanlage nicht von einem entfernten Ort, beispielsweise über das Internet, angegriffen werden kann.

Darüber hinaus kann eine Kommunikationsart, welche keinen Gebrauch von einer Internetverbindung macht, den Vorteil erreichen, dass die Fachanlage, die eine Zugangsinformation erhält und/oder die mobile Vorrichtung, die die Zugangsinformation übermittelt, zum Zeitpunkt der Übertragung der Zugangsinformation keine Internetverbindung benötigen. Das kann beispielsweise vorteilhaft sein, wenn eine Fachanlage die Zugangsinformation von einem Smartphone beispielsweise an einem Ort erhalten soll, an dem es keine stabile Internetverbindung gibt Das kann beispielsweise in einer Tiefgarage oder in ländlichen Gegenden der Fall sein, wo die Mobilfunknetzabdeckung als Grundlage für die Internetverbindung nicht ausreichend ist Zwar kann die Übertragung eine ersten Information und/oder einer Zugangsinformation zwischen verschiedenen Vorrichtungen dennoch eine Internetverbindung erfordern. Zu welcher Zeit genau die Internetverbindung vorhanden ist, ist dann aber beispielsweise von nebengeordneter Bedeutung, solange zu irgendeinem Zeitpunkt, beispielsweise nachdem eine Sendung in ein Fach der Fachanlage eingestellt wurde und bevor ein Benutzer eine für ihn in eine Fachanlage eingestellte Sendung abholen möchte, zumindest kurzzeitig eine Internetverbindung bestand. Insbesondere ist es auf diese Art und Weise möglich, dass eine Fachanlage an einem solchen Ort zuverlässiger funktioniert, als wenn eine Internetverbindung zu einem Server erforderlich ist, um festzustellen, ob ein Benutzer, der sich gegenüber der Fachanlage authentisieren möchte, berechtigt ist, Zugang zu einem oder mehreren Fächern zu erhalten.

Wie zuvor erwähnt ist die erste Kommunikationsart zur Übermittlung einer Zugangsinformation an eine Fachanlage unter Verwendung der ersten Information bestimmbar, insbesondere für die mobile Vorrichtung. Die erste Information kann dabei beliebig ausgeprägt sein, es kann sich z.B. um Buchstaben, Zahlen, Symbole, Muster, Bitfolgen o.ä. handeln. Auch eine Kombination der vorgenannten Formate ist möglich. Eine beispielhafte erste Information könnte 5, 8, 9, 10, 20, 50, eine Anzahl zwischen den genannten Werten, oder mehr oder weniger alphanumerischen Zeichen umfassen oder daraus bestehen. Eine erste Information kann auch implizit sein, beispielsweise kann eine erste Information übermittelt oder erhalten werden, indem eine Nachricht ein vorbestimmtes Nachrichtenformat hat, sodass sich die erste Information aus der Nachrichtenformatierung ergibt, ohne dass eine zusätzliche Information in eine Nachricht eingefügt wird.

Gemäß einer beispielhaften Ausführungsform aller Aspekte der Erfindung zeigt die erste Information die erste Kommunikationsart zur Übermittlung der Zugangsinformation an die Fachanlage an. Beispielsweise kann die mobile Vorrichtung, die das Verfahren gemäß dem ersten Aspekt der Erfindung ausführt, auf eine Tabelle zugreifen, die eine eineindeutige Zuordnung der Zahlen 1-4 auf vier Kommunikationsarten, z.B. die oben beschriebenen Kommunikationsarten (i)-(iv), umfasst. Erhält die mobile Vorrichtung dann eine der Zahlen 1-4 als erste Information, kann sie über die Tabelle direkt die erste Kommunikationsart zur Übermittlung der Zugangsinformation an die Fachanlage bestimmen.

Gemäß einer anderen beispielhaften Ausführungsform aller Aspekte der Erfindung ist die erste Information eine Beschaffenheitsinformation, die mit einer Beschaffenheit einer Fachanlage assoziiert ist Bei der Fachanlage kann es sich um die Fachanlage handeln, an die die Zugangsinformation auf die erste Kommunikationsart zum Erhalten von Zugang zu einem oder mehreren Fächern übermittelt wird. Wenn die erste Information eine Beschaffenheitsinformation ist, zeigt sie beispielsweise die erste Kommunikationsart nicht unmittelbar und/oder direkt an. Vielmehr bestimmt beispielsweise die mobile Vorrichtung im Verfahren gemäß dem ersten Aspekt der Erfindung unter Verwendung der ersten Information zunächst die Ausgestaltung der Fachanlage, woraufhin sie basierend auf der Ausgestaltung der Fachanlage die erste Kommunikationsart bestimmt.

Gemäß einer beispielhaften Ausführungsform aller Aspekte der Erfindung kann die Beschaffenheitsinformation mit einem oder mehreren der nachfolgend beschriebenen Beschaffenheitsmerkmale a), b) oder c) der Fachanlage assoziiert sein. Dabei sind die Beschaffenheitsmerkmale a), b) oder c) beispielhaft zu verstehen und die Beschaffenheitsinformation kann auch mit weiteren oder anderen Beschaffenheitsmerkmalen der Fachanlage oder z.B. ihrer Umgebung assoziiert sein.

Das Beschaffenheitsmerkmal a) betrifft die Verfügbarkeit einer Funkkommunikationsschnittstelle an der Fachanlage. Dabei kann die Verfügbarkeit beispielsweise die Verfügbarkeit einer speziellen Funkkommunikationsschnittstelle, z.B. einer Bluetooth-Schnittstelle, betreffen.

Das Beschaffenheitsmerkmal b) betrifft die Verfügbarkeit einer Erfassungseinheit, z.B. einer optischen und/oder akustischen Erfassungseinheit, an der Fachanlage. Dabei kann es sich bei einer optischen Erfassungseinheit z.B. um einen Scanner handeln. Das Beschaffenheitsmerkmal b) kann dann beispielsweise auch die Verfügbarkeit einer Scanfunktion betreffen, also beispielsweise ob nur QR-Codes oder nur Barcodes oder beides erfasst werden können. Bei der akustischen Erfassungseinheit kann es sich z.B. um ein Mikrofon handeln, das beispielsweise mit einer Spracherkennungseinheit oder -software zusammenwirkt

Das Beschaffenheitsmerkmal c) betrifft die Verfügbarkeit einer Eingabeeinheit, z.B. eines berührungsempfindlichen Bildschirms oder einer Tastatur, an der Fachanlage.

Die Verfügbarkeit kann dabei jeweils das Vorhandensein und/oder die konkrete Nutzbarkeit einer jeweiligen Einheit und/oder Schnitt, z.B. zu einem Zeitpunkt, für einen Benutzer oder für eine Sendung, betreffen.

In einer weiteren beispielhaften Ausführungsform aller Aspekte der Erfindung ist die erste Information eine Typinformation, sodass die erste Information einen Typ der Fachanlage anzeigt oder sodass unter Verwendung der ersten Information der Typ der Fachanlage bestimmbar ist. Der Typ der Fachanlage kann dabei beispielsweise das Model oder die Modelreihe der Fachanlage betreffen. Wenn die erste Information gemäß dieser beispielhaften Ausführungsform eine Typinformation ist, zeigt sie beispielsweise - wie die Beschaffenheitsinformation - die erste Kommunikationsart nicht unmittelbar und/oder direkt an. Vielmehr bestimmt beispielsweise die mobile Vorrichtung im Verfahren gemäß dem ersten Aspekt der Erfindung unter Verwendung der ersten Information zunächst den Typ der Fachanlage, woraufhin sie basierend auf dem Typ der Fachanlage entweder zunächst die mit dem Typ verbundene Beschaffenheit der Fachanlage und dann, basierend darauf, die erste Kommunikationsart bestimmt oder direkt die erste Kommunikationsart basierend auf dem Typ der Fachanlage bestimmt.

Im Übrigen kann das Verfahren gemäß dem zweiten Aspekt der Erfindung in einer beispielhaften Ausführungsform ein Ausgeben einer Einstellinformation umfassen, wobei unter Verwendung der Einstellinformation feststellbar ist, dass eine Sendung in ein Fach der Fachanlage eingestellt wurde. Insbesondere kann die Fachanlage zunächst feststellen, z.B. mittels eines Sensors oder durch eine Eingabe z.B. eines Zustellers oder anderen Benutzers, dass eine Sendung in ein Fach der Fachanlage eingestellt wurde. In Reaktion darauf kann sie beispielsweise die Einstellinformation ausgeben, z.B. an eine Vorrichtung oder ein System gemäß dem dritten Aspekt der Erfindung. Die Einstellinformation kann dabei beispielsweise derart ausgegeben werden, dass sie dem Fach, in das die Sendung eingestellt wurde, zuordenbar ist, beispielsweise mittels eines Indikators. Beispielhaft kann die Einstellinformation auch gleichzeitig eine Zugangsinformation zu dem Fach der Fachanlage sein, oder sie kann einer Vorrichtung ermöglichen, eine Zugangsinformation zu dem Fach der Fachanlage zu bestimmen.

Das Verfahren gemäß dem dritten Aspekt der Erfindung wiederum kann in einer beispielhaften Ausführungsform folgendes umfassen: ein Erhalten der Einstellinformation von der Fachanlage und ein Feststellen, unter Verwendung der Einstellinformation, dass eine Sendung in ein Fach der Fachanlage eingestellt wurde, wobei das Feststellen, dass eine Sendung in ein Fach der Fachanlage eingestellt wurde, ein Auslöser für das Übermitteln der ersten Information an die mobile Vorrichtung ist. Beispielsweise kann das Verfahren in dieser Ausführungsform zudem ein Feststellen umfassen, für welchen Benutzer die Sendung in die Fachanlage eingestellt wurde. Die erste Information kann dann an die mobile Vorrichtung dieses Benutzers übermittelt werden. Der Benutzer erhält mithin die erste Information in Reaktion darauf, dass für ihn eine Sendung in ein Fach der Fachanlage eingestellt wurde.

Die Ausgabe bzw. Übermittlung der Einstellinformation und der ersten Information kann dabei zusammen, also beispielsweise in einer Nachricht und/oder in Reaktion auf dasselbe Ereignis erfolgen. Die Informationen können aber beispielsweise auch getrennt, beispielsweise in unterschiedlichen Nachrichten und/oder unabhängig voneinander ausgegeben oder übermittelt werden. Zumindest diese Möglichkeiten kann es für jede Ausgabe und/oder Übermittlung von mehreren Informationen beliebiger Art geben, die in dieser Anmeldung beschrieben sind.

Eine weitere Information, deren Übertragung in dieser Anmeldung beschrieben ist, ist die Zugangsinformation. Die Zugangsinformation kann von einer mobilen Vorrichtung an eine Fachanlage übermittelt werden, um Zugang zu einem oder mehreren Fächern der Fachanlage zu erhalten. Dazu kann das Verfahren gemäß dem dritten Aspekt in einer beispielhaften Ausführungsform folgendes umfassen: Erhalten oder Bestimmen einer zweiten Information, die als die Zugangsinformation verwendbar ist oder die zur Erzeugung der Zugangsinformation erforderlich ist; und Übermitteln der zweiten Information an die mobile Vorrichtung, wobei zum Beispiel das Übermitteln der ersten Information und das Übermitteln der zweiten Information durch dasselbe Ereignis ausgelöst werden. Die zweite Information kann beispielsweise ein Kennwort sein, das zum Zugang zu einem oder mehreren Fächern der Fachanlage berechtigt. Es kann sich bei der zweiten Information aber beispielsweise auch um eine, z.B. mit einem öffentlichen Schlüssel verschlüsselte, Information handeln, die von einer mobilen Vorrichtung zunächst noch verarbeitet, z.B. mit einem privaten Schlüssel entschlüsselt, werden muss, um die Zugangsinformation zu bestimmen.

Die zweite Information kann in manchen Ausführungsformen mittelbar oder unmittelbar von der Fachanlage erhalten werden. Die Fachanlage kann die zweite Information dazu beispielsweise bestimmt haben, z.B. ausgelöst durch das Einstellen einer Sendung oder einen Schritt im Einstellvorgang einer Sendung. In anderen Ausführungsformen kann die zweite Information aber beispielsweise im Verfahren gemäß dem dritten Aspekt der Erfindung bestimmt werden.

In manchen Ausführungsformen kann die zweite Information die zuvor beschriebene Einstellinformation sein, insbesondere also die Funktion der Einstellinformation haben.

Das Übermitteln der ersten Information und das Übermitteln der zweiten Information an die mobile Vorrichtung kann in manchen Ausführungsformen des Verfahrens gemäß dem dritten Aspekt der Erfindung mittelbar oder unmittelbar durch das Einstellen einer Sendung oder einen Schritt im Einstellvorgang einer Sendung ausgelöst werden. Auch der Erhalt der ersten Information und/oder einer Einstellinformation und/oder einer zweiten Information können ein auslösendes Ereignis zum Übermitteln der ersten und zweiten Information sein.

In einer beispielhaften Ausführungsform umfasst das Verfahren gemäß dem ersten Aspekt der Erfindung das Erhalten der zweiten Information, die als die Zugangsinformation verwendbar ist oder die zur Erzeugung der Zugangsinformation erforderlich ist. Dabei kann die mobile Vorrichtung die erste und die zweite Information von derselben Vorrichtung oder demselben System erhalten. Zudem kann das Erhalten der ersten Information und das Erhalten der zweiten Information durch dasselbe Ereignis ausgelöst werden, beispielsweise das Ereignis, durch das das Übermitteln der ersten Information und das Übermitteln der zweiten Information im Verfahren gemäß dem dritten Aspekt der Erfindung ausgelöst werden kann.

In beispielhaften Ausführungsformen kann das Verfahren gemäß dem zweiten Aspekt der Erfindung das Bestimmen der Zugangsinformation unter Verwendung der zweiten Information umfassen, beispielsweise indem die zweite Information entschlüsselt und/oder anderweitig verarbeitet wird. Das Bestimmen der Zugangsinformation kann dabei z.B. in Reaktion auf den Erhalt der zweiten Information erfolgen. In anderen Ausführungsformen kann das Bestimmen der Zugangsinformation aber beispielsweise auch durch eine Benutzereingabe an der mobilen Vorrichtung, der Unterschreitung eines Abstands zwischen der mobilen Vorrichtung und der Fachanlage, oder durch das Starten einer App ausgelöst werden. Auch andere und/oder zusätzliche Auslöser sind möglich.

Die Verfahren nach verschiedenen Aspekten der Erfindung können beispielsweise für einen Abholvorgang zumindest einer Sendung aus dem einen oder den mehreren Fächern der Fachanlage erfolgen. In einer beispielhaften Ausführungsform des Verfahrens gemäß dem dritten Aspekt der Erfindung kann somit insbesondere das Erhalten oder das Bestimmen der zweiten Information und das Übermitteln der zweiten Information für einen Abholvorgang zumindest einer Sendung aus dem einen oder den mehreren Fächern der Fachanlage erfolgen. Auch das Erhalten der zweiten Information in einer beispielhaften Ausführungsform des Verfahrens gemäß dem ersten Aspekt der Erfindung kann für einen Abholvorgang zumindest einer Sendung aus dem einen oder den mehreren Fächern der Fachanlage erfolgen.

Die Verfahren nach verschiedenen Aspekten der Erfindung können aber beispielsweise zusätzlich oder stattdessen auch für einen Einstellvorgang zumindest einer Sendung in das eine oder in die mehreren Fächern der Fachanlage erfolgen. Die Verfahren gemäß verschiedenen Aspekten der Erfindung können beispielsweise dazu beispielhaft wie folgt ausgestaltet sein.

In einer beispielhaften Ausführungsform umfasst das Verfahren gemäß dem ersten Aspekt der Erfindung das Übermitteln einer Reservierungsanfrage an eine Vorrichtung, die eine Reservierungsinformation bestimmen kann, z.B. die Vorrichtung oder das System, welche oder welches das Verfahren gemäß dem dritten Aspekt der Erfindung ausführt. Das Übermitteln der Reservierungsfrage kann beispielsweise durch eine Benutzereingabe an einer mobilen Vorrichtung ausgelöst werden. Zum Beispiel kann ein Benutzer, der eine Retoure in eine Fachanlage einstellen möchte, in einer App auf seinem Smartphone eine interaktive Oberfläche anklicken, die einen Reservierungsvorgang startet. Im Laufe des Reservierungsvorgangs kann die App dann beispielsweise Daten erfassen, die sie teilweise oder ganz in die Reservierungsanfrage einfügt. Die Übermittlung kann dabei, wie zu anderen Übermittlungen oben beschrieben, z.B. über eine Internet- oder Funkverbindung erfolgen, z.B. verschlüsselt. Die Reservierungsanfrage kann dabei z.B. in einer einzelnen Nachricht zu sehen sein, in einem Teil einer Nachricht, oder auch in einer Abfolge von Nachrichten oder Teilen von Nachrichten.

In einer beispielhaften Ausführungsform umfasst das Verfahren gemäß dem zweiten Aspekt der Erfindung ein Erhalten der Reservierungsanfrage von der mobilen Vorrichtung und ein Bestimmen einer Reservierungsinformation, wobei die Reservierungsinformation eine Reservierung eines oder mehrerer Fächer der Fachanlage anzeigt Die Reservierung kann dabei beispielsweise eine Reservierung zum Einstellen einer Sendung durch einen Benutzer sein. Insbesondere kann eine Reservierung beispielsweise bedeuten, dass außer dem Benutzer, für den ein Fach reserviert ist, kein anderer Benutzer eine Sendung in das reservierte Fach einstellen können soll. Das Erhalten kann beispielsweise wie zuvor für andere Übermittlungen beschrieben erfolgen, z.B. per Internet und/oder Mobilfunk, und/oder z.B. verschlüsselt.

Dabei kann das Bestimmen der Reservierungsinformation zum Beispiel in Reaktion auf den Erhalt der Reservierungsanfrage erfolgen. Insbesondere kann das Bestimmen der Reservierungsinformation beispielhaft mit einem Reservieren des einen oder der mehreren Fächern der Fachanlage einhergehen. Die Reservierung des einen oder der mehreren Fächer der Fachanlage kann dabei z.B. für eine vorbestimmte Zeit, ab einer vorbestimmten Zeit und/oder in einem vorbestimmten Zeitraum erfolgen. Reserviert beispielsweise ein Benutzer ein Fach für 08:00 Uhr am Folgetag, kann die Reservierung des Fachs beispielsweise ab dem Reservierungszeitpunkt bis am Folgetag 08:00 Uhr erfolgen (beispielsweise mit einer vorbestimmten zusätzlichen Zeit, z.B. 30 Minuten). Reserviert beispielsweise ein Benutzer ein Fach für in acht Stunden, kann die Reservierung des Fachs beispielsweise ab dem Reservierungszeitpunkt bis in 8 Stunden erfolgen (beispielsweise mit einer vorbestimmten zusätzlichen Zeit, z.B. 30 Minuten).

Eine Information, mit der bestimmbar ist, für und/oder ab welcher Zeit und/oder in welchem Zeitraum eine Reservierung erfolgen soll, kann beispielsweise ebenfalls in der Reservierungsanfrage enthalten sein oder neben der Reservierungsanfrage erhalten werden. Gleiches gilt z.B. für eine Information, mit der eine Größe eines Faches bestimmbar ist, für welches die Reservierung erfolgen kann. Auch weitere Informationen, die z.B. weitere Anforderungen an das zu reservierende Fach spezifizieren bzw. bestimmbar machen, z.B. Anforderungen an ein kühlbares oder beheizbares Fach und/oder ein Fach mit konstanter Luftfeuchtigkeit, können beispielhaft jeweils in der Reservierungsanfrage enthalten sein oder neben der Reservierungsanfrage erhalten werden. Alternativ oder zusätzlich kann auch eine Information, die den Benutzer identifiziert oder identifizierbar macht, in der Reservierungsanfrage enthalten sein oder neben der Reservierungsanfrage erhalten werden. Die Informationen können jeweils beispielsweise durch eine Benutzereingabe an einer mobilen Vorrichtung bestimmt worden sein, von der die Information erhalten wurde.

In einer beispielhaften Ausführungsform des Verfahrens gemäß dem ersten und/oder zweiten Aspekt der Erfindung kann die Reservierungsanfrage zudem eine Ortsinformation umfassen oder neben der Reservierungsanfrage kann eine Ortsinformation, die mit der Reservierungsanfrage assoziiert ist, an die Vorrichtung oder das System übermittelt und/oder von der Vorrichtung oder dem System erhalten werden. Die Ortsinformation kann beispielsweise einen Ort oder eine Fläche angeben, an dem oder in der ein Benutzer eine Fachanlage mit einem verfügbaren Fach zum Einstellen einer Sendung sucht. Die Ortsinformation kann dabei beispielsweise per GPS oder durch eine Benutzereingabe an der mobilen Vorrichtung bestimmt werden.

Zusätzlich oder alternativ umfasst das Verfahren gemäß dem ersten und/oder zweiten Aspekt der Erfindung in einer beispielhaften Ausführungsform ein Bestimmen der Fachanlage, für welche die Reservierungsinformation, die die Reservierung des einen oder der mehreren Fächer der Fachanlage anzeigt, bestimmt werden wird, aus einer Vielzahl von Fachanlagen. Beispielsweise verwaltet die Vorrichtung oder das System, welche oder welches das Verfahren gemäß dem zweiten Aspekt der Erfindung ausführt, die Vielzahl von Fachanlagen. Wurde im Verfahren gemäß dem zweiten Aspekt der Erfindung beispielhaft eine Information erhalten, welche den Benutzer, der die Reservierung anfragt, identifizierbar macht, kann beispielsweise basierend auf gespeicherten Präferenzen des Benutzers und/oder statistischen Daten eine Fachanlage bestimmt werden, z.B. eine regelmäßig von ihm genutzte Fachanlage. Das Bestimmen der Fachanlage kann aber beispielsweise auch lediglich das Bestimmen der Fachanlage unter Verwendung einer Information sein, die eine Fachanlage anzeigt bzw. bestimmbar macht. Die Information kann beispielsweise zuvor von einer mobilen Vorrichtung mittels einer Benutzereingabe erfasst worden sein.

In einer beispielhaften Ausführungsform des Verfahrens gemäß dem ersten und/oder zweiten Aspekt der Erfindung wird die Fachanlage unter Verwendung einer (bzw. der) Ortsinformation bestimmt. So kann beispielsweise bewirkt werden, dass eine Fachanlage in der Nähe z.B. einer Wohnung des Benutzers, seinem aktuellen Aufenthaltsort, seiner Arbeitsstätte, eines Point of Interest (POI) wie einem Bahnhof oder Flughafen oder einem anderen vom Benutzer ausgewählten Ort bestimmt wird.

In einer beispielhaften Ausführungsform umfasst das Verfahren gemäß dem ersten und/oder zweiten Aspekt der Erfindung ein Ermitteln der ersten Information aus einer Vielzahl von gespeicherten ersten Informationen, wobei unter Verwendung einer jeweiligen gespeicherten ersten Information der Vielzahl von gespeicherten ersten Informationen jeweils eine erste Kommunikationsart zur Übermittlung einer jeweiligen Zugangsinformation an eine jeweilige Fachanlage bestimmbar ist. Insbesondere kann beispielsweise unter Verwendung der Information, welche Fachanlage z.B. zuvor bestimmt wurde, die erste Information aus einer Vielzahl von gespeicherten ersten Informationen ermittelt werden.

In einer beispielhaften Ausführungsform umfasst das Verfahren gemäß dem zweiten Aspekt der Erfindung ein Übermitteln der Reservierungsinformation an die mobile Vorrichtung, wobei zum Beispiel das Übermitteln der Reservierungsinformation und das Übermitteln der ersten Information durch dasselbe Ereignis ausgelöst werden, z.B. durch den Erhalt der Reservierungsanfrage. Mittels der Reservierungsinformation kann die mobile Vorrichtung beispielsweise feststellen, dass ein Fach und/oder mehrere Fächer einer Fachanlage reserviert wurden.

In einer beispielhaften Ausführungsform aller Aspekte der Erfindung ist die Reservierungsinformation oder zumindest ein Teil der Reservierungsinformation als die Zugangsinformation verwendbar. Insbesondere kann die Reservierungsinformation also beispielsweise im Verfahren gemäß dem ersten Aspekt der Erfindung auf die erste Kommunikationsart an die Fachanlage übermittelt werden, um Zugang zu einem oder mehreren Fächern der Fachanlagen zu erhalten. Für das Format der Reservierungsinformation gilt das, was zuvor oben für das Format der Zugangsinformation beschrieben wurde, insbesondere unabhängig davon, ob die Reservierungsinformation tatsächlich im konkreten Fall als Zugangsinformation verwendbar ist und/oder als Zugangsinformation verwendet wird.

In einer beispielhaften Ausführungsform umfasst das Verfahren gemäß dem ersten Aspekt der Erfindung das Erhalten der Reservierungsinformation, wobei die Reservierungsinformation eine Reservierung des einen oder der mehreren Fächer der Fachanlage anzeigt, zu dem oder zu denen mit dem Übermitteln der Zugangsinformation Zugang erhalten werden soll. Die Reservierungsinformation kann zum Beispiel in Reaktion auf das Übermitteln der Reservierungsanfrage erhalten werden.

In einer beispielhaften Ausführungsform des Verfahrens gemäß dem ersten Aspekt der Erfindung kann die mobile Vorrichtung die Reservierungsinformation und die erste Information von derselben Vorrichtung oder demselben System erhalten, insbesondere also nicht von unterschiedlichen Vorrichtungen oder Systemen. Vielmehr kann zum Beispiel das Erhalten der ersten Information und das Erhalten der Reservierungsinformation durch dasselbe Ereignis ausgelöst werden, z.B. durch das Absenden einer Reservierungsanfrage, die wiederum das Bestimmen einer Reservierungsinformation und das Übermitteln einer Reservierungsinformation an die mobile Vorrichtung ausgelöst hat Die erste Information und die Reservierungsinformation können beispielsweise zusammen in einer Nachricht und/oder in verschiedenen Nachrichten, z.B. in Reaktion auf dasselbe Ereignis, erhalten werden.

Ein Benutzer erhält die Reservierungsinformation auf seiner mobilen Vorrichtung, z.B. seinem Smartphone, z.B. nachdem er in einer App eine Reservierungsanfrage ausgelöst hat Nach Erhalt der Reservierungsinformation kann er sich beispielsweise in einer App anzeigen lassen, für welches Fach oder welche Fächer und/oder welche Fachanlage die Reservierung erfolgt ist bzw. vorliegt. Zusätzlich kann die Reservierungsinformation so ausgestaltet sein, dass die App weitere Informationen anzeigt oder anzeigen kann, z.B. für welchen vorbestimmten Zeitraum das Fach oder die Fächer reserviert sind und/oder welche Größe und/oder weiteren Eigenschaften das Fach oder die Fächer haben. Die App kann beispielsweise auch weitere Informationen anzeigen, z.B. basierend auf der ersten Information, z.B. die erste Kommunikationsart, auf die die Zugangsinformation (oder die Reservierungsinformation, die als Zugangsinformation verwendbar ist) an die Fachanlage übermittelt werden soll. Der Benutzer kann sich dann beispielsweise innerhalb des Reservierungszeitraums zur Fachanlage begeben, um dort die Zugangsinformation (oder die Reservierungsinformation als Zugangsinformation) an die Fachanlage auf die erste Kommunikationsart zu übermitteln, um Zugang zu dem einen oder den mehreren reservierten Fächern der Fachanlage zu erhalten.

Wie zuvor erwähnt kann das Bestimmen der Reservierungsinformation und das Übermitteln der Reservierungsinformation in einer beispielhaften Ausführungsform des Verfahrens gemäß dem zweiten Aspekt der Erfindung für einen Einstellvorgang einer Sendung in das eine oder die mehreren Fächer der Fachanlage erfolgen. Gleichermaßen kann das Übermitteln der Reservierungsanfrage und das Erhalten der Reservierungsinformation in einer beispielhaften Ausführungsform des Verfahrens gemäß dem ersten Aspekt der Erfindung für einen Einstellvorgang einer Sendung in das eine oder die mehreren Fächer der Fachanlage erfolgen kann.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den Flussdiagrammen gibt nicht notwendigerweise die tatsächliche (zeitliche) Reihenfolge der Schritte vor und ist lediglich beispielhaft Nichtsdestotrotz können die Schritte zeitlich in genau der Abfolge auftreten/durchgeführt werden, wie sie in den Flussdiagrammen dargestellt sind. Darüber hinaus können, müssen sie aber nicht in Reaktion aufeinander durchgeführt werden.

Es zeigen:
- Fig. 1: eine schematische Darstellung einer beispielhaften Ausführungsform eines Systems gemäß der vorliegenden Erfindung, beispielhaft umfassend eine Fachanlage, eine mobile Vorrichtung und einen Server;
- Fig. 2: ein Flussdiagramm einer beispielhaften Ausführungsform eines Verfahrens gemäß dem ersten Aspekt der vorliegenden Erfindung, beispielsweise ausgeführt und/oder gesteuert von einer mobilen Vorrichtung;
- Fig. 3: ein Flussdiagramm einer beispielhaften Ausführungsform eines Verfahrens gemäß dem zweiten Aspekt der vorliegenden Erfindung, beispielsweise ausgeführt und/oder gesteuertvon einer Fachanlage;
- Fig. 4: ein Flussdiagramm einer beispielhaften Ausführungsform eines Verfahrens gemäß dem dritten Aspekt der vorliegenden Erfindung, beispielsweise ausgeführt und/oder gesteuert von einem Server;
- Fig. 5: eine schematische Darstellung einer beispielhaften Ausführungsform einer Vorrichtung gemäß dem ersten Aspekt der Erfindung, beispielsweise einer mobilen Vorrichtung;
- Fig. 6: eine schematische Darstellung einer beispielhaften Ausführungsform einer Vorrichtung gemäß dem zweiten Aspekt der Erfindung, beispielsweise einer Fachanlage;
- Fig. 7: eine schematische Darstellung einer beispielhaften Ausführungsform einer Vorrichtung gemäß dem dritten Aspekt der Erfindung, beispielsweise einem Server;
- Fig. 8: eine schematische Darstellung beispielhafter Datenübertragungen zwischen Vorrichtungen, insbesondere zwischen einer beispielhaften mobilen Vorrichtung, einem beispielhaften Server und einer beispielhaften Fachanlage, die jeweils beispielhafte Ausführungsformen von Verfahren gemäß einem jeweiligen Aspekt der Erfindung ausführen;
- Fig. 9: ein Flussdiagramm einer beispielhaften Ausführungsform eines Verfahrens, welches Schritte gemäß einer beispielhaften Ausführungsform des Verfahrens gemäß dem ersten Aspekt der vorliegenden Erfindung umfasst;
- Fig. 10: ein Flussdiagramm einer weiteren beispielhaften Ausführungsform eines Verfahrens, welches Schritte gemäß einer beispielhaften Ausführungsform des Verfahrens gemäß dem ersten Aspekt der vorliegenden Erfindung umfasst

### Detaillierte Beschreibung einiger beispielhafter Ausführungsformen

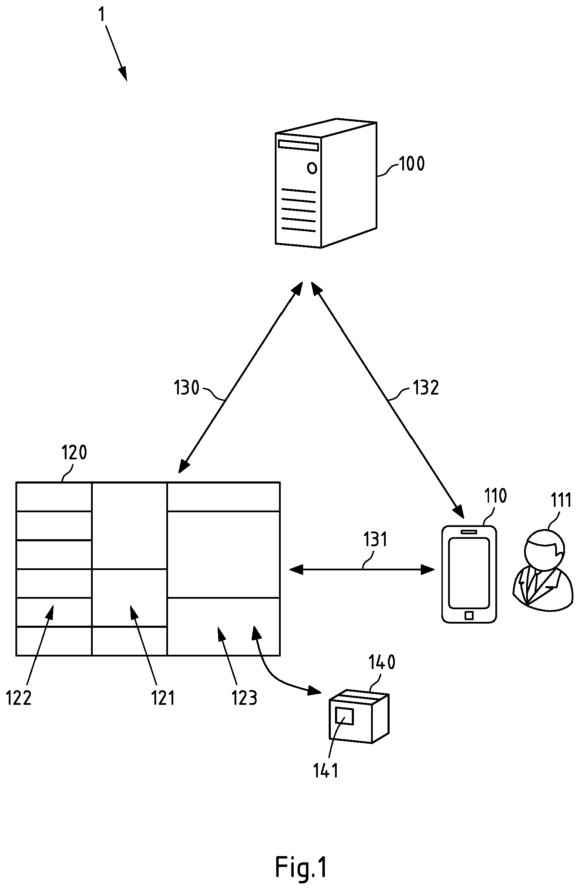

Fig. 1 zeigt eine schematische Darstellung einer beispielhaften Ausführungsform eines Systems 1 gemäß der vorliegenden Erfindung, beispielhaft umfassend eine Fachanlage 120, eine mobile Vorrichtung 110 und einen Server 100.

Das System 1 umfasst eine Fachanlage 120 mit einer Mehrzahl von Fächern, von denen beispielhaft drei Fächer in Fig. 1 mit Bezugszeichen 121, 122, 123 versehen sind. Jedes der Fächer der Fachanlage 120 ist zur Aufnahme einer oder mehrerer Sendungen 140 für einen jeweiligen individuellen Benutzer 111 vorgesehen. Einem individuellen Benutzer 111 können auch mehrere Fächer zugeordnet sein. Jedes Fach ist im Grundzustand verriegelt bzw. geschlossen und kann anweisungsgesteuert und individuell durch beispielsweise eine in der Fachanlage 120 vorgesehene Schlosssteuereinheit elektrisch entriegelt bzw. geöffnet werden. Ein Beispiel einer derartigen Fachanlage 120 ist eine Fachanlage 120 gemäß dem bekannten Packstation-Konzept der Anmelderin.

Die Fachanlage 120 ist mit einer oder mehreren Kommunikationsschnittstelle(n) ausgerüstet, die beispielsweise eine Schnittstelle zur drahtlosen Kommunikation mit der mobilen Vorrichtung 110 umfasst/umfassen. Die drahtlose Kommunikationsverbindung 131 basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth oder WLAN.

In manchen Fällen umfasst die Fachanlage 120 aber beispielsweise keine Schnittstelle zur drahtlosen Kommunikation mit einer mobilen Vorrichtung 110 oder eine solche Schnittstelle ist, beispielsweise grundsätzlich oder nur in bestimmten Situationen, nicht nutzbar oder wird nicht genutzt, obwohl sie grundsätzlich nutzbar wäre. Zusätzlich oder alternativ kann es eine Vielzahl von Fachanlagen geben, von denen die Fachanlage 120 eine ist und von denen manche eine Schnittstelle zur drahtlosen Kommunikation mit einer mobilen Vorrichtung 110 zur Nutzung bereitstellen und manche nicht Ist eine drahtlose Schnittstelle nicht verfügbar, kann beispielsweise eine Übermittlung einer Zugangsinformation, die auf der mobilen Vorrichtung 110 vorhanden ist und beispielsweise angezeigt wird, mittels eines Benutzers 111 erfolgen, der diese Zugangsinformation oder einen Teil dieser Zugangsinformation beispielsweise über eine Eingabeeinheit oder Benutzerschnittstelle (z.B. eine Tastatur oder einen berührungsempfindlichen Bildschirm mit Bildschirmtastatur oder ein Spracherkennungsmodul) an der Fachanlage 120 eingibt und somit übermittelt Darüber hinaus kann eine Fachanlage 120 beispielhaft auch eine Ausgabeeinheit umfassen, z.B. zum Anzeigen von Informationen, z.B. einen Bildschirm.

Die Fachanlage 120 ist beispielsweise auch zur Kommunikation mit dem Server 100 eingerichtet, verfügt also beispielsweise über eine Kommunikationsschnittstelle, die einen Zugang zum Internet oder zu einem anderen Netz, an das das Server 100 angeschlossen ist, ermöglicht Die Fachanlage 120 ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie über die Kommunikationsverbindung 130 mit dem Server 100 kommunizieren kann. Je nach Situation kann die Kommunikationsverbindung 130 mit dem Server 100 nur zeitweise vorliegen und/oder nutzbar sein, z.B. wenn die Fachanlage 120 an einem Ort platziert ist, wo keine stabile Mobilfunkabdeckung vorliegt. In verschiedenen Ausführungsformen ist die Fachanlage 120 aber beispielsweise nicht dazu eingerichtet direkt mit dem Server 100 zu kommunizieren oder von einer Vielzahl von Fachanlagen sind nur manche eingerichtet direkt mit dem Server 100 zu kommunizieren. Falls keine direkte Verbindung 130 mit dem Server 100 vorliegt, können Fachanlagen 120 dann beispielsweise Gebrauch von einem zur Weiterleitung von Daten eingerichteten Gerät machen, um mit dem Server 100 zu kommunizieren. Das zur Weiterleitung eingerichtete Gerät kann beispielsweise Informationen über eine Fern-Kommunikationsschnittstelle mit dem Server 100 und Informationen über eine Nahbereichs-Kommunikationsschnittstelle mit der Fachanlage 120 austauschen und so Informationen vom Server 100 an die Fachanlage 120 und andersherum weiterleiten.

Der Server 100 repräsentiert beispielhaft ein Backend-System. Der Server kann z.B. eine Vielzahl von Fachanlagen einschließlich der Fachanlage 120 und/oder eine Vielzahl von Benutzern einschließlich des Benutzers 111 verwalten und/oder mit ihnen kommunizieren. Der Server 100 kann beispielsweise über eine Kommunikationsverbindung 132 mit der mobilen Vorrichtung 110 eines Benutzers 111 kommunizieren. Bei der Kommunikationsverbindung 132 kann es sich z.B. um eine Internetverbindung handeln, die beispielhaft auch streckenweise eine Übertragung in einem Mobilfunknetzwerk umfasst

In der im Folgenden beschriebenen Ausführungsform handelt es sich bei der mobilen Vorrichtung 110 um die mobile Vorrichtung 110 der Person 111. Die Person 111 kann das Smartphone beispielsweise nutzen, um eine Zugangsberechtigung zu einem oder mehreren Fächern 121, 122, 123 der Fachanlage 120 gegenüber der Fachanlage 120 nachzuweisen. Die Person 111 kann also z.B. ein Benutzer der Fachanlage 120 sein. Dabei können unter Benutzern generell beispielsweise Personen verstanden werden, die die Fachanlage 120 zum Empfangen und/oder Versenden von Sendungen 140 (z.B. Pakete, Briefe, Speisen, Lebensmittel, etc.) verwenden/verwenden wollen, sowie Zusteller, die derartige Sendungen 140 in die Fachanlage 120 ein- bzw. zustellen oder aus der Fachanlage 120 abholen/abholen wollen. Ein Benutzer 111 kann ein Mensch oder eine Maschine sein, z.B. ein Fahrzeug, ein Roboter oder eine Drohne, um nur ein paar Beispiele zu nennen. Handelt es sich bei dem Benutzer 111, kann die mobile Vorrichtung 110 z.B. auch als Handscanner ausgebildet sein.

Das Einstellen einer Sendung 140 kann beispielsweise durch einen Zusteller, z.B. einen menschlichen oder maschinellen, erfolgen. Dazu authentisiert sich dieser beispielsweise gegenüber der Fachanlage 120 und scannt beispielsweise das Etikett 141 oder andere Sendungsinformationen der Sendung 140 mit seinem Handscanner. Der Handscanner übermittelt die erfassten Informationen dann an die Fachanlage 120. Zusätzlich oder alternativ hält der Zusteller das Etikett 141 der Sendung 140 vor einen Scanner der Fachanlage 120, sodass diese das Etikett 141 scannen und die Sendungsinformationen der Sendung 140 erfassen kann. Daraufhin wird beispielsweise ein Fach 123 der Fachanlage geöffnet, in das die Sendung 140 eingestellt werden kann. Sobald die Sendung 140 eingestellt ist, wird das Fach 123 beispielsweise wieder geschlossen. Die Fachanlage 120 erzeugt dann beispielsweise eine Zugangsbasisinformation beispielsweise basierend zumindest auf einem Zufalls- oder Pseudozufallswert. Die Kenntnis dieser Zugangsbasisinformation kann einer anderen, z.B. der mobilen Vorrichtung 110, ermöglichen, eine Zugangsinformation zu erzeugen, die dann beispielsweise als Nachweis gegenüber der Fachanlage 120 dienen kann, dass die mobile Vorrichtung 110 zum Zugang zum Fach 123 der Fachanlage 120 berechtigt ist.

In verschiedenen Ausführungsformen ist oder umfasst die Zugangsbasisinformation die Zugangsinformation, die von der mobilen Vorrichtung 110 an die Fachanlage 120 übermittelt werden kann, z.B. im Klartext. In anderen Ausführungsformen kann die erzeugte Zugangsbasisinformation von der Zugangsinformation umfasst werden.

Alternativ oder zusätzlich bestimmt die Fachanlage 120 basierend auf der Zugangsbasisinformation eine zweite Information für das Fach 123, z.B. indem sie die Zugangsbasisinformation u.a. verschlüsselt. Die zweite Information ist dann also z.B. eine verschlüsselte Form der Zugangsbasisinformation. Die Verschlüsselung kann dabei z.B. mit einem öffentlichen Schlüssel eines asymmetrischen Schlüsselpaares erfolgen, wobei die mobile Vorrichtung 110 z.B. über den zugehörigen privaten Schlüssel des asymmetrischen Schlüsselpaares Zugriff hat

Die Fachanlage 120 übermittelt anschließend Informationen an den Server 100, beispielsweise über die Kommunikationsverbindung 130 oder auch über ein zur Weiterleitung von Daten eingerichtetes Gerät, z.B. das Gerät des Zustellers, der die Sendung 140 eingestellt hat und noch eine Nahbereichs-Funkkommunikationsverbindung zur Fachanlage 120 hat. Die Informationen umfassen eine erste Information und, beispielhaft, zusätzlich die zweite Information. Die erste Information kann dabei genutzt werden, um eine erste Kommunikationsart anzeigen, auf die eine Zugangsinformation zu einem späteren Zeitpunkt an die Fachanlage 120 übermittelt werden soll. Die übermittelten Informationen können zusätzlich weitere Informationen umfassen, z.B. eine Sendungskennung der Sendung 140 und/oder eine Benutzerkennung, beispielsweise eines Empfängers der Sendung 140.

Der Server 100 erhält diese Informationen und versteht z.B. die zweite Information als Einstellinformation, sodass er feststellt, dass eine Sendung 140 in ein Fach 123 der Fachanlage 120 eingestellt wurde. Daraufhin identifiziert bzw. bestimmt der Server 100 beispielsweise basierend auf der Sendungskennung und/oder der Benutzerkennung den Benutzer 111 und/oder dessen mobile Vorrichtung 110 und übermittelt Informationen an die mobile Vorrichtung 110. Diese Informationen umfassen beispielhaft die erste Information (die der Server 100 in dieser Ausführungsform von der Fachanlage 120 erhalten hat, in anderen Ausführungsformen aber auch z.B. nach Eingabe durch eine Person lediglich speichert) und die zweite Information. Darüber hinaus können in manchen Ausführungsformen noch weitere Informationen übermittelt werden, z.B. die Kennung der Fachanlage 120, in welche die Sendung 140 eingestellt wurde. Die mobile Vorrichtung 110 kann dem Benutzer 111 dann beispielsweise in einer App anzeigen, dass eine Sendung 140 für ihn in der Fachanlage 120 zur Abholung bereit liegt. Der Benutzer 111 hat dann beispielsweise die Möglichkeit die Sendung 140 innerhalb einer vorbestimmten Zeitspanne, z.B. 9 Tage, aus der Fachanlage 120 abzuholen.

Der Benutzer 111 kann sich dann innerhalb der vorbestimmten Zeitspanne zur Fachanlage 120 begeben und auf seiner mobilen Vorrichtung 110 die App starten, die ihm angezeigt hat, dass die Sendung 140 für ihn in der Fachanlage 120 zur Abholung bereit liegt. Alternativ oder zusätzlich kann er die App auf vorbestimmte Art bedienen, um die Ausführung der nachfolgend beschriebenen Schritte auszulösen, z.B. indem er eine interaktive Oberfläche, z.B. einen Button mit dem Titel "Abholen", auswählt. Die mobile Vorrichtung 110 entschlüsselt daraufhin beispielsweise die zweite Information, um die Zugangsbasisinformation, die von der Fachanlage 120 verschlüsselt wurde, in entschlüsselter Form zu erhalten und als Zugangsinformation verwenden zu können oder zumindest basierend auf der entschlüsselten Form der zweiten Information, d.h. der Zugangsbasisinformation, eine Zugangsinformation erzeugen zu können. Zudem bestimmt die mobile Vorrichtung 110 unter Verwendung der erhaltenen ersten Information, dass die Zugangsinformation durch eine Übermittlung mittels einer Funkverbindung, insbesondere Bluetooth, an die Fachanlage 120 übermittelt werden soll. Die Übermittlung soll also insbesondere nicht durch eine Übermittlung mittels eines optischen Musters, welches auf einem Bildschirm der mobilen Vorrichtung 110 angezeigt wird zur Erfassung durch eine Erfassungseinheit der Fachanlage 120, durch eine Übermittlung mittels Anzeige der Zugangsinformation auf einem Bildschirm der mobilen Vorrichtung 110 zur visuellen Erfassung durch den Benutzer 111, der die Zugangsinformation dann an einer Eingabeeinheit der Fachanlage 120 eingibt, oder durch eine akustische Übermittlung erfolgen, obwohl die mobile Vorrichtung 110 auch eine oder mehrerer dieser Übermittlungsarten hätte nutzen können.

Anschließend übermittelt die mobile Vorrichtung 110 die Zugangsinformation mittels einer Funkverbindung, insbesondere Bluetooth, an die Fachanlage 120. Die Fachanlage 120 stellt daraufhin fest, ob die Zugangsinformation zum Zugang zu einem Fach, z.B. dem Fach 123, oder mehreren Fächern 121, 122, 123 der Fachanlage 120 berechtigt Zum Feststellen nutzt sie beispielsweise die Zugangsinformation, die sie selbst erzeugt und an den Server 100 übermittelt hat. Im vorliegenden Ausführungsbeispiel gewährt sie daraufhin Zugang zum Fach 123, zu dem die Zugangsinformation zum Zugang berechtigt. Der Benutzer 111 kann die Sendung 140 dann aus dem Fach 123 entnehmen. Zu den Fächern 121 und 122 gewährt sie in diesem Ausführungsbeispiel keinen Zugang, da die Zugangsinformation nicht zum Zugang zu diesen Fächern 121, 122 berechtigt.

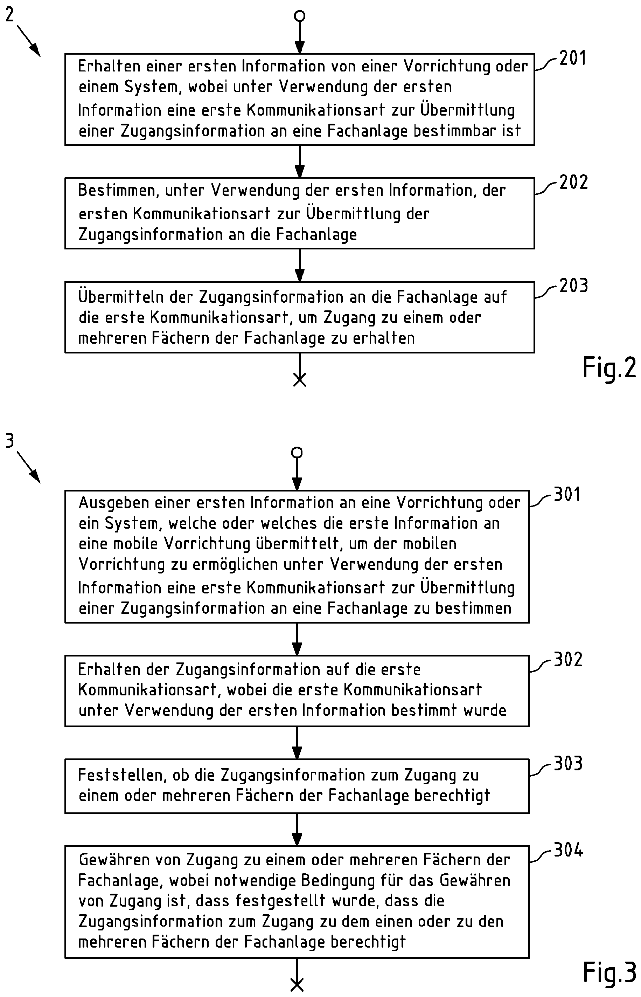

Fig. 2 zeigt ein Flussdiagramm 2 einer beispielhaften Ausführungsform eines Verfahrens gemäß dem ersten Aspekt der vorliegenden Erfindung, beispielsweise ausgeführt und/oder gesteuert von einer mobilen Vorrichtung 110.

Schritt 201 umfasst ein Erhalten einer ersten Information von einer Vorrichtung oder einem System, z.B. dem Server 100, wobei unter Verwendung der ersten Information eine erste Kommunikationsart zur Übermittlung einer Zugangsinformation an einer Fachanlage bestimmbar ist.

Zum Beispiel kann es sich bei der ersten Information um eine Beschaffenheitsinformation handeln, die mit einer Beschaffenheit der Fachanlage 120 assoziiert ist, insbesondere z.B. um eine Typinformation, die den Typ, also z.B. das Modell oder die Modellreihe, der Fachanlage 120 anzeigt. Beispielhaft zeigt die Beschaffenheits- - bzw. in diesem speziellen Fall die Typinformation - an, dass die Fachanlage 120, in deren Fach 121 eine Sendung 140 für einen Benutzer 111 eingestellt wurde, eine Fachanlage 120 des Typs "B" ist Dabei gibt es zum Beispiel eine Vielzahl von Fachanlagen 120, die beispielsweise miteinander assoziiert sind, z.B. indem sie vom selben Server 110 verwaltet werden und/oder mit demselben Server 100 kommunizieren, und von denen manche Fachanlagen 120 Fachanlagen des Typs "A", manche des Typs "B" und manche des Typs "C" sind. Die mobile Vorrichtung 110 hat beispielhaft Zugriff auf eine Zuordnungstabelle, unter Verwendung derer sie feststellen kann, dass Fachanlagen 120 des Typs "B" über eine optische Erfassungseinheit, z.B. für einen QR-Code, und über einen berührungsempfindlichen Bildschirm verfügen, nicht hingegen über eine Funkkommunikationsschnittstelle, über die eine Zugangsinformation an die jeweilige Fachanlage 120 übermittelt werden kann. Zudem hat die mobile Vorrichtung 110 beispielhaft Zugriff auf eine Prioritätstabelle bzw. Prioritätsinformation, basierend auf der sie feststellen kann, dass die Verwendung einer Erfassungseinheit gegenüber der Verwendung einer Eingabeeinheit bevorzugt ist, wenn diese zwei ersten Kommunikationsarten zur Verfügung stehen.

Beispielsweise unter Verwendung solcher Tabellen wird in Schritt 202 die erste Kommunikationsart zur Übermittlung der Zugangsinformation an die Fachanlage 120 unter Verwendung der ersten Information bestimmt Das Bestimmen kann dabei beispielsweise durch den Erhalt der ersten Information ausgelöst werden und/oder darauf folgen. Ein alternativer oder zusätzlicher Auslöser für das Bestimmen kann eine vorbestimmte Eingabe an der mobilen Vorrichtung 110 sein, z.B. das Öffnen einer App oder das Auswählen einer interaktiven Oberfläche in der App durch einen Benutzer 111.

Im Hinblick auf die "Art" der ersten Information wird allerdings hervorgehoben, dass es sich nicht um eine Beschaffenheitsinformation handeln muss. In verschiedenen Ausführungsformen kann die erste Information direkt die erste Kommunikationsart anzeigen, sodass die mobile Vorrichtung 110 die erste Kommunikationsart beispielsweise direkt unter Verwendung einer Tabelle bestimmen kann. Die Tabelle kann dann z.B. Werte der ersten Information, z.B. "00", "01", "10", direkt einer jeweiligen ersten Kommunikationsart, z.B. "Funk", "optisches Muster", oder "Eingabe", zuordnen.

Schritt 203 umfasst das Übermitteln der Zugangsinformation an die Fachanlage 120 auf die erste Kommunikationsart, um Zugang zu einem oder mehreren Fächern 121, 122, 123 der Fachanlage 120 zu erhalten. Auch der Schritt 203 kann durch einen der vorangegangenen Schritte und/oder durch eine Eingabe an der mobilen Vorrichtung 110, z.B. das Öffnen einer App oder das Auswählen einer interaktiven Oberfläche in der App, ausgelöst werden.

Fig. 3 zeigt ein Flussdiagramm 3 einer beispielhaften Ausführungsform eines Verfahrens gemäß dem zweiten Aspekt der vorliegenden Erfindung, beispielsweise ausgeführt und/oder gesteuert von einer Fachanlage 120 und/oder einem System umfassend eine Fachanlage 120.

Schritt 301 umfasst ein Ausgeben einer ersten Information an eine Vorrichtung oder ein System, z.B. den Server 100, welche oder welches die erste Information an eine mobile Vorrichtung 110 übermittelt, um der mobilen Vorrichtung 110 zu ermöglichen unter Verwendung der ersten Information eine erste Kommunikationsart zur Übermittlung einer Zugangsinformation an die Fachanlage 120 zu bestimmen. Eine Fachanlage 120, die diesen Schritt 301 ausführt, kann die erste Information, die z.B. ihre Beschaffenheit und/oder ihren Typ anzeigt oder bestimmbar macht, gespeichert haben. Stellt dann beispielsweise ein Zusteller eine Sendung 140 in ein Fach 123 ein, kann das ein Auslöser für das Ausgeben gemäß Schritt 301 sein. In verschiedenen Ausführungsformen kann der Schritt 301 aber beispielsweise auch und/oder nur dann ausgeführt werden, wenn die Fachanlage 120, die den Schritt 301 ausführt, erstmalig (überhaupt oder nach Ablauf einer vorbestimmten Zeit) z.B. wieder mit der Vorrichtung oder dem System kommunizieren kann.

Schritt 302 umfasst ein Erhalten der Zugangsinformation auf die erste Kommunikationsart, z.B. von der mobilen Vorrichtung 110, wobei die erste Kommunikationsart, z.B. von der mobilen Vorrichtung 110, unter Verwendung der ersten Information bestimmt wurde. Wann dieser Schritt auftritt, kann beispielsweise vom Benutzer 111 abhängen und wann dieser Benutzer 111 eine Sendung 140 aus dem Fach 123 der Fachanlage 120 abholen möchte. Der Schritt 302 kann daher beispielsweise einige Minuten, Stunden, Tage, Wochen oder Monate nach dem Schritt 301 ausgeführt werden.

Schritt 303 umfasst ein Feststellen, ob die Zugangsinformation zum Zugang zu einem oder mehreren Fächern 121, 122, 123 der Fachanlage 120 berechtigt Dazu kann die Fachanlage 120, die den Schritt 303 ausführt, über entsprechende Informationen verfügen, z.B. kann sie einen vorbestimmten Hashalgorithmus mit der Zugangsinformation oder einem Teil der Zugangsinformation als Eingabewert verwenden, um das Ergebnis des Hashalgorithmus mit einem, z.B. gespeicherten, Hashwert, der zum Zugang zu dem Fach 123 der Fachanlage 120 berechtigt, zu vergleichen. Fällt der Vergleich positiv aus, sind also beispielsweise die verglichenen Informationen gleich, kann beispielsweise Zugang zum Fach 123 gewährt werden, wie in Schritt 304 beschrieben. In verschiedenen Ausführungsformen kann das Feststellen aber beispielsweise zusätzlich oder alternativ das direkte Vergleichen der Zugangsinformation mit einer gespeicherten Information, die zum Zugang zu einem oder mehreren Fächern der Fachanlage berechtigt, umfassen. In verschiedenen Ausführungsformen kann das Feststellen zudem oder stattdessen ein Entschlüsseln der erhaltenen Zugangsinformation und ein Vergleichen der entschlüsselten Zugangsinformation mit einer gespeicherten Information, die zum Zugang zu einem oder mehreren Fächern 121, 122, 123 der Fachanlage 120 berechtigt, umfassen. Außerdem kann beispielsweise eine Gültigkeitsdauer berücksichtigt werden, sodass beispielsweise eine Zugangsinformation nur in einem vorbestimmten Zeitraum zum Zugang zu einem oder mehreren Fächern 121, 122, 123 der Fachanlage 120 berechtigt.

Schritt 304 umfasst ein Gewähren von Zugang zu einem oder mehreren Fächern 121, 122, 123 der Fachanlage 120, wobei notwendige Bedingung für das Gewähren von Zugang ist, dass festgestellt wurde, dass die Zugangsinformation zum Zugang zu dem einen oder zu den mehreren Fächern 121, 122, 123 der Fachanlage 120 berechtigt Der Schritt 304 kann beispielsweise durch den Abschluss des Schritts 303, insbesondere durch ein positives Feststellen, dass die Zugangsinformation zum Zugang zu einem oder mehreren Fächern 121, 122, 123 der Fachanlage 120 berechtigt, ausgelöst werden.

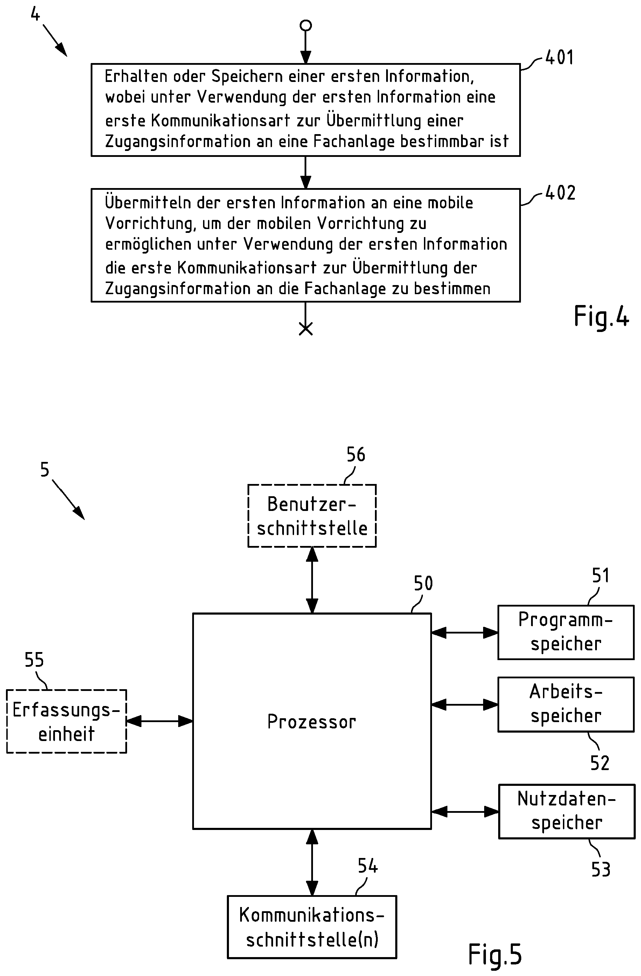

Fig. 4 zeigt ein Flussdiagramm 4 einer beispielhaften Ausführungsform eines Verfahrens gemäß dem dritten Aspekt der vorliegenden Erfindung, beispielsweise ausgeführt und/oder gesteuert von einem Server 100.

Schritt 401 umfasst ein Erhalten oder Speichern einer ersten Information, wobei unter Verwendung der ersten Information eine erste Kommunikationsart zur Übermittlung einer Zugangsinformation an eine Fachanlage 120 bestimmbar ist Die Vorrichtung, die den Schritt 401 ausführt, kann dabei eine Vielzahl von ersten Informationen erhalten und/oder speichern, wobei unter Verwendung einer jeweiligen gespeicherten ersten Information jeweils eine erste Kommunikationsart zur Übermittlung einer jeweiligen Zugangsinformation an eine jeweilige Fachanlage bestimmbar ist. Also beispielsweise speichert die Vorrichtung für eine Vielzahl von Fachanlagen pro Fachanlage eine erste Information. Diese jeweilige erste Information kann beispielsweise eine Beschaffenheit der jeweiligen Fachanlage anzeigen oder bestimmbar machen.

Das Erhalten kann auf unterschiedliche Weise erfolgen. Beispielsweise kann ein Benutzer die jeweilige erste Information eingeben und/oder einer jeweiligen Fachanlage 120 zuordnen, z.B. in einer Benutzeroberfläche eines Programms oder einer Webseite, das oder die zumindest teilweise auf der Vorrichtung läuft und/oder mit ihr kommuniziert. Zusätzlich oder alternativ kann das Erhalten von einer anderen Vorrichtung erfolgen, beispielsweise einer Fachanlage 120. In Schritt 401 können auch weitere Informationen erhalten oder gespeichert werden, z.B. eine Ortsinformation pro Fachanlage 120, die z.B. anzeigt, wo sich die Fachanlage 120 befindet Weitere Informationen wie z.B. die Nutzbarkeit einer Schnittstelle, z.B. zu einer vorbestimmten Zeit, oder die Nicht-Nutzbarkeit einer Schnittstelle, z.B. wegen eines technischen Defekts und/oder einer Deaktivierung, können ebenfalls für eine jeweilige Fachanlage 120 gespeichert werden.

Die Speicherung aller Informationen kann dabei so erfolgen, dass Informationen, welche dieselbe Fachanlage 120 betreffen, einander zugeordnet oder einander zuordenbar sind.

Schritt 402 umfasst das Übermitteln der ersten Information an eine mobile Vorrichtung 110, um der mobilen Vorrichtung 110 zu ermöglichen unter Verwendung der ersten Information die erste Kommunikationsart zur Übermittlung der Zugangsinformation an die Fachanlage 120 zu bestimmen. Der Schritt 402 kann durch den Erhalt der ersten Information in Schritt 401 ausgelöst werden. Zusätzliche oder alternative Auslöser sind jedoch möglich. In verschiedenen Ausführungsformen kann Schritt 402 durch den Erhalt einer Einstellinformation, welche wie zuvor beschrieben eine zweite Information sein oder umfassen kann, ausgelöst werden. Auch eine Anfrage, z.B. von der mobilen Vorrichtung 110, kann die Übermittlung der ersten Information an die mobile Vorrichtung 110 auslösen.

Das Format, in welchem die erste Information erhalten und/oder gespeichert wird, und das Format, in welchem die erste Information an die mobile Vorrichtung 110 übermittelt wird, können gleich oder verschieden sein. Die erste Information kann beispielsweise auch im Rahmen des Verfahrens gemäß dem Flussdiagramm 4 verarbeitet werden, z.B. nach ihrem Erhalt und vor ihrer Übermittlung. Beispielsweise kann die erste Information an einer Vorrichtung, die das Verfahren gemäß Flussdiagramm 4 ausführt, als Typinformation gespeichert sein. Die Vorrichtung kann dann vor der Übermittlung, z.B. unter Verwendung einer Typ-zu-Beschaffenheits-Tabelle eine Beschaffenheit der Fachanlage 120 bestimmen, an die die mobile Vorrichtung 110 die Zugangsinformation auf die erste Kommunikationsart übermitteln soll. Die erste Information kann also in Form einer Typinformation gespeichert und/oder erhalten werden und in Form einer Beschaffenheitsinformation an die mobile Vorrichtung 110 übermittelt werden. Der Informationsgehalt der ersten Information ist insoweit in Bezug auf die erste Kommunikationsart unverändert. Anders gesagt kann also die erste Information unabhängig von einer konkreten Form sein, z.B. solange beim Bestimmen der ersten Kommunikationsart dieselbe erste Kommunikationsart bestimmt wird, z.B. unabhängig davon ob beim Bestimmen eine Typ-zu-Beschaffenheits-Tabelle und/oder eine Beschaffenheits-zu-Kommunikationsart-Tabelle verwendet wird.

Fig. 5 ist eine schematische Darstellung einer beispielhaften Ausführungsform einer Vorrichtung 5 gemäß dem ersten Aspekt der Erfindung. Die Vorrichtung 5 kann beispielsweise ein portables Scangerät eines Zustellers/Lieferanten darstellen (einen sog. Handscanner), also ein Gerät, das zur optischen Erfassung von Sendungs- oder Lieferungsdaten, insbesondere in Form von 2D- oder 3D-Barcodes, von der Sendung 140 oder Lieferung eingerichtet ist. Bei der Vorrichtung 5 kann es sich aber beispielsweise auch um ein Smartphone handeln, also insbesondere um ein Mobiltelefon mit der Fähigkeit, auch komplexere Programme, sog. Apps, selbstständig auszuführen. Die Vorrichtung 5 kann das Mobilgerät 110 des Benutzers 111 repräsentieren.

Die Vorrichtung 5 umfasst einen Prozessor 50, einen Programmspeicher 51, einen Arbeitsspeicher 52, einen Nutzdatenspeicher 53, eine oder mehrere Kommunikationsschnittelle(n) 54, eine optionale Erfassungseinheit 55 zur Erfassung von z.B. Sendungs- oder Lieferungsdaten oder anderen Informationen und eine optionale Benutzerschnittstelle 56.

Der Prozessor 50 führt beispielsweise ein Programm gemäß dem ersten Aspekt der Erfindung aus, das in dem Programmspeicher 51 gespeichert ist, beispielsweise als App oder als Firmware. Arbeitsspeicher 52 dient insbesondere der Speicherung temporärer Daten während des Ablaufs dieses Programms.

Der Nutzdatenspeicher 53 dient der Speicherung von Daten, die bei der Abarbeitung des Programms erforderlich sind, beispielsweise eines oder mehrerer, z.B. erster, Informationen, Zuordnungen oder Zuordnungstabellen von ersten Informationen zu jeweiligen ersten Kommunikationsarten, Zugangsinformationen, oder Reservierungsinformationen.

Die Kommunikationsschnittstelle(n) 54 umfassen eine oder mehrere Schnittstellen zur Kommunikation der Vorrichtung mit dem Server 100, der ein Beispiel für die Vorrichtung 7 ist. Die Schnittstelle kann beispielsweise auf IP beruhen, aber sich aufgrund der Portabilität der Vorrichtung 5 einer drahtlosen Übertragungstechnik als physikalischer Schicht bedienen, die beispielsweise auf zellularem Mobilfunk (z.B. GSM, E-GSM, UMTS, LTE, 5G) oder eine WLAN (Wireless Local Area Network) beruht. Die Kommunikationsschnittstelle(n) 54 umfassen optional ferner eine Schnittstelle zur Kommunikation mit der Fachanlage 120, beispielsweise basierend auf optischer Übertragung, Bluetooth oder NFC. Hier kann eine Übertragungstechnik mit verhältnismäßig geringer Reichweite, beispielsweise weniger als 100m oder 10m oder 5m ausreichend und ggf. sogar erwünscht sein, um ein Abhören der Übertragung durch Dritte zu erschweren.

Die Benutzerschnittstelle 56 kann als Bildschirm und Tastatur oder als berührungsempfindliche Anzeige (Touchscreen) ausgestaltet sein, ggf. mit zusätzlichen akustischen und/oder haptischen Signalgebungseinheiten. Die Anzeige einer Zugangsinformation über die Benutzerschnittstelle 56 kann eine gesonderte Schnittstelle 54 zur Kommunikation mit der Fachanlage 120 unnötig machen, wenn die Zugangsinformation in eine Benutzerschnittstelle der Fachanlage 120 eingegeben werden kann. Die Erfassungseinheit 55 kann zur Erfassung von Informationen dienen, z.B. kann die Erfassungseinheit dazu eingerichtet sein QR- oder Barcodes oder andere optische Muster zu erfassen, z.B. Sendungs- oder Lieferungsdaten, z.B. mittels einer optischen Scaneinheit. Die Erfassungseinheit kann beispielsweise zusätzlich vorhanden sein, wenn es sich bei dem Gerät um das Gerät eines Zustellers/Lieferanten handelt, aber beispielsweise nicht, wenn es sich bei dem Gerät um ein Smartphone eines Empfängers einer Sendung 140 handelt.

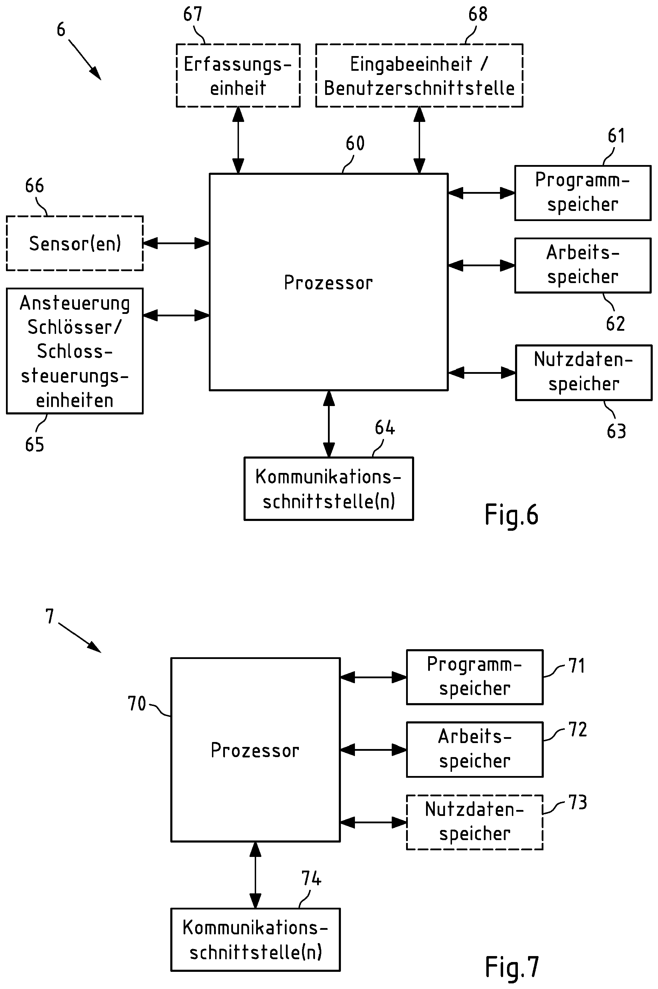

Fig. 6 ist eine schematische Darstellung einer beispielhaften Ausführungsform einer Vorrichtung 6 gemäß dem zweiten Aspekt der Erfindung. Die Vorrichtung 6 kann beispielsweise eine Fachanlage 120 (siehe Fig. 1) oder deren Steuereinheit repräsentieren.

Die Vorrichtung 6 umfasst einen Prozessor 60, einen Programmspeicher 61, einen Arbeitsspeicher 62, einen Nutzdatenspeicher 63, eine oder mehrere Kommunikationsschnittelle(n) 64, eine Ansteuerungseinheit 65 für die Schlösser oder Schlosssteuereinheiten der Fächer der Fachanlage, einen oder mehrere optionale Sensoren 66, eine optionale Erfassungseinheit 67 und eine optionale Eingabeeinheit/Benutzerschnittstelle 68. Der Prozessor 60 führt beispielsweise ein Programm gemäß dem zweiten Aspekt der Erfindung aus, das in dem Programmspeicher 61 gespeichert ist, beispielsweise als Firmware. Arbeitsspeicher 62 dient insbesondere der Speicherung temporärer Daten während des Ablaufs dieses Programms.

Der Nutzdatenspeicher 63 dient der Speicherung von Daten, die bei der Abarbeitung des Programms erforderlich sind. Vorliegend kann es sich dabei beispielsweise um Informationen halten, die von der Vorrichtung 6 verwendet werden können, um feststellen zu können, ob eine Zugangsinformation zum Zugang berechtigt Auch weitere Daten wie beispielsweise erste Informationen können beispielsweise im Nutzdatenspeicher 63 gespeichert werden, z.B. in Datenstrukturen, die auch eine Zuordnung von Zugangsinformationen zu jeweiligen Indikatoren und/oder jeweiligen Fächern repräsentieren.

Die Kommunikationsschnittstelle(n) 64 umfasst/umfassen beispielsweise eine Schnittstelle zur drahtlosen Kommunikation mit den Geräten 5 und/oder 7, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Vorrichtung 6 (und mithin die Fachanlage 120) ist beispielsweise ferner zur direkten Kommunikation mit der Vorrichtung 7 (und mithin dem Server 100) eingerichtet, verfügt also beispielsweise über eine Kommunikationsschnittstelle, die einen Zugang zum Internet oder zu einem anderen Netz, an das die Vorrichtung 7 angeschlossen ist, ermöglicht

Die Ansteuerungseinheit 65 ermöglicht es, ein einzelnes Fach 123 der Fachanlage 120 gezielt zu öffnen oder zu entriegeln, um die Öffnung zu ermöglichen, insbesondere durch Ansteuerung des Schlosses des Fachs 123 oder eine Schlosssteuereinheit des Fachs 123. Zusätzlich oder alternativ kann die Verriegelung eines Fachs 123 bewirkt werden. Die Ansteuerungseinheit 65 ist beispielsweise über eine jeweilige Verdrahtung mit allen Schlössern oder Schlosssteuereinheiten der Fachanlage 120 verbunden oder an einen Bus angeschlossen, an dem auch alle Schlösser oder Schlosssteuereinheiten der Fachanlage 120 angebunden sind.

Die Sensoren 66 sind optional und beispielsweise fachspezifisch. Ein Sensor ermöglicht es beispielsweise zu detektieren, ob sich in einem jeweiligen Fach 123 eine jeweilige Sendung 140 befindet und/oder ob in das Fach 123 eine Sendung 140 eingestellt und/oder entnommen wird/wurde. Der gleiche Sensor oder ein weiterer Sensor ermöglicht z.B. die Erfassung von Informationen einer Sendung 140, beispielsweise indem optisch ein Etikett 141 gescannt oder ein der Sendung 140 zugehöriger NFC-Tag gelesen wird.

Die Erfassungseinheit 67 ist optional und in einer beispielhaften Ausführungsform ein Scanner, welcher optisch Informationen erfassen kann, z.B. einen Bar- oder QR-Code von einem Bildschirm einer mobilen Vorrichtung 5. In einer weiteren beispielhaften Ausführungsform ist die Erfassungseinheit 67 dazu eingerichtet NFC-Tags zu lesen, die beispielsweise an einer jeweiligen Sendung 140 befestigt und oder in diese eingelegt sind. Die Erfassungseinheit 67 kann zusätzlich oder alternativ in der Lage sein, akustische Signale zu erfassen und zu verarbeiten, also z.B. mittels Spracherkennung.

Die Eingabeeinheit/Benutzerschnittstelle 68 ist optional und zur Kommunikation mit einem Zusteller/Lieferanten und/oder dem Benutzer 111 eingerichtet. Dies kann beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen.

Fig. 7 ist eine schematische Darstellung einer beispielhaften Ausführungsform einer Vorrichtung 7 gemäß dem dritten Aspekt der Erfindung. Die Vorrichtung 7 kann beispielsweise den Server 100 repräsentieren, bei dem es sich beispielsweise um einen Fachanlagenverwaltungsserver handeln kann.

Die Vorrichtung 7 umfasst einen Prozessor 70, einen Programmspeicher 71, einen Arbeitsspeicher 72, einen optionalen Nutzdatenspeicher 73 sowie eine oder mehrere Kommunikationsschnittelle(n) 74. Der Prozessor führt beispielsweise ein Programm gemäß dem dritten Aspekt der Erfindung aus, das in dem Programmspeicher 71 gespeichert ist, beispielsweise als Firmware. Arbeitsspeicher 72 dient insbesondere der Speicherung temporärer Daten während des Ablaufs dieses Programms.

Der Nutzdatenspeicher 73 dient der Speicherung von Daten, die bei der Abarbeitung des Programms erforderlich sind. Vorliegend kann es sich dabei beispielsweise um erste Informationen oder andere Informationen handeln, z.B. Zugangsinformationen. Es kann sich aber auch z.B. um Benutzerkennungen, Benutzerkontaktdaten, wie E-Mail-Adressen und Mobilfunknummern, Fachanlagenkennungen und Sendungsdaten handeln. Alle Daten können beispielsweise verschlüsselt gespeichert sein Im Nutzdatenspeicher 73 können zudem Informationen über eine Vielzahl von Fachanlagen 120 gespeichert sein, beispielsweise eine jeweilige erste Information pro Fachanlage der Vielzahl von Fachanlagen und/oder Ortsinformationen, die beispielsweise einen Standort einer jeweiligen Fachanlage 120 anzeigen. Die erhaltenen und zu übermittelnden Informationen können aber beispielsweise auch nur im Arbeitsspeicher 72 zwischengespeichert werden und sofort nach Übermittlung wieder gelöscht werden. Eine beispielhafte Vorrichtung 7, die lediglich Daten weiterleitet, benötigt dann nicht notwendigerweise einen Nutzdatenspeicher 73.

Die Kommunikationsschnittstelle(n) 74 kann/können zumindest eine Schnittstelle zur Kommunikation mit anderen Einheiten des Systems 1 z.B. mit der mobilen Vorrichtung 110 und/oder der Fachanlage 120 umfassen. Diese Kommunikation kann beispielsweise auf dem Internet Protocol (IP) basieren. Beispielsweise ist dazu zumindest eine der Kommunikationsschnittstelle(n) 74 als Local Area Network (LAN) Schnittstelle ausgeführt.

In den Ausführungsbeispielen der Fig. 5-7 kann der Prozessor 50, 60, 70 beispielsweise jeweils eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASICs) oder ein Field Programmable Gate Array (FPGAs) sein. Der Programmspeicher und/oder der Nutzdatenspeicher kann in den Ausführungsbeispielen der Fig. 5-7 beispielsweise ein persistenter Speicher, wie beispielsweise ein Read-Only-Memory (ROM)-Speicher sein. Der Programmspeicher kann beispielsweise fest mit dem jeweiligen Prozessor 50, 60, 70 verbunden sein, kann aber alternativ auch lösbar mit dem jeweiligen Prozessor 50, 60, 70 verbunden sein, beispielsweise als Speicherkarte, Diskette oder optisches Datenträgermedium (z.B. eine CD oder DVD). Der Arbeitsspeicher der Ausführungsbeispiele der Fig. 5-7 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

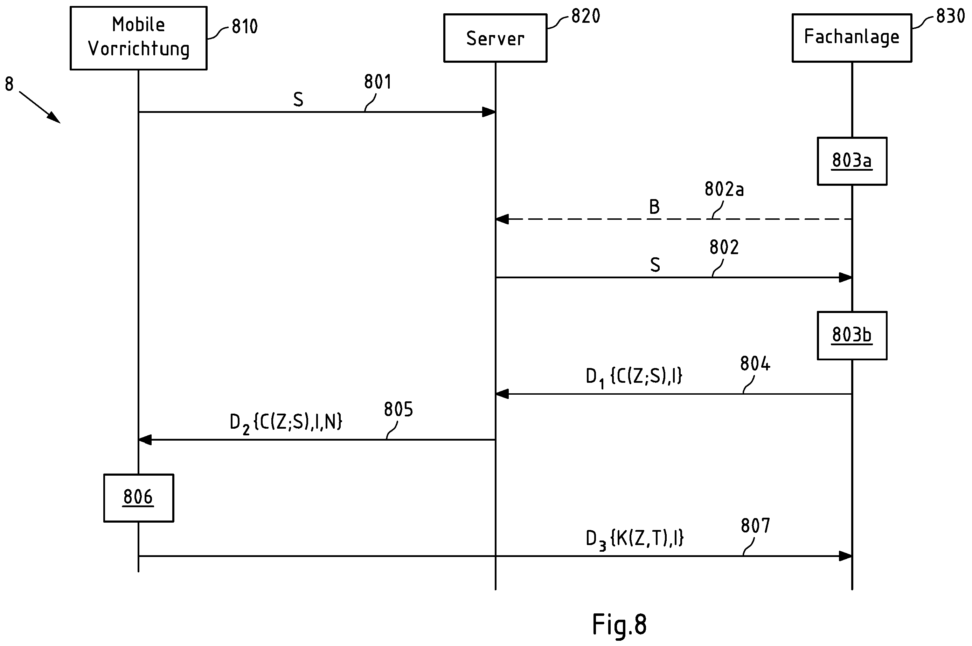

Fig. 8 zeigt eine schematische Darstellung beispielhafter Datenübertragungen 8 zwischen Vorrichtungen, insbesondere zwischen einer beispielhaften mobilen Vorrichtung 810, einem beispielhaften Server 820 und einer beispielhaften Fachanlage 830.

Die mobile Vorrichtung 810 führt beispielsweise eine Ausführungsform des Verfahrens gemäß dem ersten Aspekt der Erfindung aus. Die mobile Vorrichtung 810 repräsentiert beispielsweise die mobile Vorrichtung 110 des Systems 1 und/oder die Vorrichtung 5. Es kann sich bei der mobilen Vorrichtung 810 beispielsweise um ein Smartphone oder einen Handscanner, z.B. eines Zustellers, handeln.

Der Server 820 führt beispielsweise eine Ausführungsform des Verfahrens gemäß dem dritten Aspekt der Erfindung aus. Der Server 820 repräsentiert beispielsweise den Server 100 des Systems 1 und/oder die Vorrichtung 7.

Die Fachanlage 830 führt beispielsweise eine Ausführungsform des Verfahrens gemäß dem zweiten Aspekt der Erfindung aus. Die Fachanlage 830 repräsentiert beispielsweise die Fachanlage 120 des Systems 1 und/oder die Vorrichtung 6.

Die mobile Vorrichtung 810 erzeugt zunächst einen Schlüssel S und übermittelt ihn in Schritt 801 an den Server 820. Es handelt sich bei dem Schlüssel S beispielhaft um einen öffentlichen Schlüssel eines asymmetrischen Schlüsselpaares und die mobile Vorrichtung 810 speichert den zugehörigen privaten Schlüssel des asymmetrischen Schlüsselpaares, insbesondere z.B. ohne ihn an den Server 820 zu übermitteln.

Der Server 820 leitet den Schlüssel S in Schritt 802 an die Fachanlage 830 weiter. In einer beispielhaften Ausführungsform geschieht dies in Antwort auf eine Anfrage 802a der Fachanlage 830. Mit der Anfrage wird beispielhaft derjenige Schlüssel S vom Server 820 angefragt, der mit der Benutzerkennung B assoziiert ist. Diese Anfrage 802a kann wiederum beispielsweise von einem Ereignis 803a ausgelöst worden sein, beispielsweise dem Einstellen einer Sendung 140 für den Empfänger mit der Benutzerkennung B in ein Fach der Fachanlage. In anderen Ausführungsformen oder in anderen Situationen kann/können die Anfrage 802a und/oder das Ereignis 803a entfallen und der Server 820 stellt der Fachanlage 830 den Schlüssel S, z.B. gemeinsam mit der zugehörigen Benutzerkennung B, in einem Schritt 802 zur Verfügung, z.B. bevor oder unabhängig davon, ob eine Sendung für den Empfänger mit der Benutzerkennung B in ein Fach der Fachanlage 830 eingestellt wurde.

Wird dann beispielsweise zum einem späteren Zeitpunkt eine Sendung in ein Fach der Fachanlage 830 eingestellt, z.B. markiert durch das Ereignis 803b in der Fig. 8, können dadurch verschiedene Schritte ausgelöst werden.

Beispielhaft erzeugt die Fachanlage 830 zunächst eine Zugangsbasisinformation Z, verschlüsselt die Zugangsbasisinformation Z mit dem Schlüssel S und assoziiert einen Indikator I mit der Zugangsbasisinformation Z. Die Assoziation kann beispielsweise über eine Tabelle oder mittels einer Liste oder eines Arrays erfolgen. Der Indikator kann somit dazu dienen, dass eine Fachanlage bei einem späteren Erhalt einer Zugangsanfrage, die den Indikator umfasst, feststellen kann, welche Zugangsbasisinformation zum Feststellen, ob eine Zugangsinformation zum Zugang berechtigt, verwendet werden muss. Der Indikator kann auf diese Weise auch mit einem Fach der Fachanlage 830 assoziiert sein.

Daraufhin kann die Fachanlage 830 die mit dem Schlüssel verschlüsselte Zugangsbasisinformation Z (in Fig. 8 notiert als C(Z;S)) und den Indikator I in Schritt 804 an den Server 820 übermitteln, z.B. als erste Daten D₁ in einem oder in mehreren Datenpaketen. In verschiedenen Ausführungsformen können die ersten Daten D₁ zudem eine erste Information umfassen, welche es einer mobilen Vorrichtung 810 ermöglicht, eine erste Kommunikationsart zur Übermittlung einer Zugangsinformation an die Fachanlage 830 zu bestimmen.

Der Server 820 nimmt in Schritt 805 nach Erhalt der Daten D₁ eine Ausgabe/Übermittlung von zweiten Daten D₂ an die mobile Vorrichtung 810 vor, z.B. in einem oder in mehreren Datenpaketen. Dabei umfassen die zweiten Daten D₂ zumindest C(Z;S), den Indikator I und eine erste Information N, wobei die mobile Vorrichtung 810 unter Verwendung der ersten Information N eine erste Kommunikationsart zur Übermittlung einer Zugangsinformation an die Fachanlage bestimmen kann. Die erste Information N wurde z.B. vom Server 820 unter Verwendung einer Datenbank bestimmt, die eine Vielzahl von ersten Informationen für eine Vielzahl von jeweiligen Fachanlagen mit jeweiliger Zuordnung speichert.

C(Z;S) und/oder I sind dabei ein Beispiel für eine zweite Information, die zur Erzeugung einer Zugangsinformation erforderlich ist.

Die mobile Vorrichtung 810 kann nach Erhalt der zweiten Daten D₂ die verschlüsselte Information C(Z;S) entschlüsseln, z.B. unter Verwendung des gespeicherten privaten Schlüssels des asymmetrischen Schlüsselpaares. Sie kann somit die Zugangsbasisinformation Z erhalten. Im Zusammenhang mit einem Ereignis 806, z.B. in Reaktion auf das Ereignis 806, kann sie anschließend zumindest basierend auf der Zugangsbasisinformation Z ein Kennwort K erzeugen. Im vorliegenden Ausführungsbeispiel wird das Kennwort beispielhaft basierend ferner auf einem Zeitwert T erzeugt. Das Ereignis 806 kann z.B. eine Benutzereingabe sein oder die Feststellung der mobilen Vorrichtung 810, dass sie sich in der Nähe der Fachanlage 830 befindet.

Zudem bestimmt die mobile Vorrichtung 810 unter Verwendung der ersten Information N die erste Kommunikationsart zur Übermittlung einer Zugangsinformation an die Fachanlage. Beispielhaft bestimmt die mobile Vorrichtung 810 als erste Kommunikationsart eine Übermittlung mittels eines optischen Musters, welches auf einem Bildschirm der mobilen Vorrichtung 810 angezeigt wird zur Erfassung durch eine Erfassungseinheit der Fachanlage 830.

Entsprechend zeigt die mobile Vorrichtung 810 dritte Daten D₃ zur Übermittlung 807 an die Fachanlage 830 als optisches Muster, z.B. QR-Code an. Das kann beispielsweise geschehen nachdem sich der Benutzer der Fachanlage 830 nähert und/oder z.B. in Reaktion darauf, dass der Benutzer eine App in vorbestimmter Weise öffnet. Der Benutzer der mobilen Vorrichtung 810 kann die mobile Vorrichtung 810 dann derart vor eine Erfassungseinheit der Fachanlage 830 halten, dass die Fachanlage 830 die dritten Daten D₃ erfassen kann. Dabei umfassen die dritten Daten D₃ zumindest das basierend zumindest auf der Zugangsbasisinformation Z und beispielhaft dem Zeitwert T erzeugte Kennwort K(Z,T) und den Indikator I. Das Kennwort K(Z, T) und/oder der Indikator und können als beispielhafte Zugangsinformation gemäß einem der Aspekte der Erfindung verstanden werden.

Die Fachanlage 830 kann nach Erhalt der Zugangsinformation prüfen, ob die Zugangsinformation zum Zugang berechtigt. Dabei kann sie beispielhaft wie folgt vorgehen.

Basierend zumindest auf dem in den dritten Daten D₃ enthaltenen Indikator kann die Fachanlage nach Erhalt der dritten Daten eine Zugangsbasisinformation Z und ein Fach der Fachanlage bestimmen. Im vorliegenden Ausführungsbeispiel erzeugt die Fachanlage 830 daraufhin drei Kennwörter unter Nutzung derselben Verfahrensschritte, die die mobile Vorrichtung 810 verwendet hat, um das Kennwort K(Z, T) zu erzeugen. Die Fachanlage 830 erzeugt dann ein Kennwort basierend auf der Zugangsbasisinformation Z und dem aktuellen, beispielhaft auf 60 Sekunden gerundeten UNIX-Zeitwert (t₀), ein weiteres Kennwort basierend auf der Zugangsinformation Z und dem vorherigen, auf 60 Sekunden gerundeten UNIX-Zeitwert (t₁) und ein weiteres Kennwort basierend auf der Zugangsinformation Z und dem nächsten, auf 60 Sekunden gerundeten UNIX-Zeitwert (t₊₁). Die Fachanlage 830 kann daraufhin jedes der drei Kennwörter mit dem in den dritten Daten erhaltenen Kennwort K(Z, T) vergleichen und beispielsweise feststellen, dass das Kennwort, welches sie basierend auf der Zugangsbasisinformation Z und dem vorherigen, auf 60 Sekunden gerundeten UNIX-Zeitwert (t₋₁) erzeugt hat, mit dem in den dritten Daten enthaltenen Kennwort K(Z, T) übereinstimmt. Die Fachanlage 830 kann daher den Zugang zum entsprechenden Fach der Fachanlage gewähren.

Für alle beispielhaften Datenübertragungen 8 gilt dabei, dass eine durch einen Pfeil dargestellte Übertragung, z.B. 804, ebenso aber auch 801, 802a, 802, 805 oder 807, entweder die Übermittlung in einer Einheit, z.B. einem Paket eines Kommunikationsprotokolls, oder die Übermittlung in mehreren, z.B. auch voneinander getrennten Einheiten, z.B. mehrere Pakete eines oder mehrerer jeweiliger Kommunikationsprotokolle, repräsentiert. Eine jeweilige Übermittlung kann beispielsweise auch verschlüsselt stattfinden, also insbesondere z.B. mit einer über die Verschlüsselung mit dem Schlüssel S hinausgehenden Verschlüsselung. Auch weitere jeweilige Verarbeitungsschritte sind möglich, z.B. eine Entropie-Kodierung, eine Kodierung mittels eines Forward Error Correction (FEC)-Codes, oder eine Signierung. Dabei kann es sich beispielsweise um eine Verschlüsselung und/oder Verarbeitung gemäß einer für ein jeweiliges Kommunikationsprotokoll, z.B. Bluetooth, WLAN, 4G oder 5G, üblichen Verschlüsselung und/oder Verarbeitung handeln. Aber auch unübliche und/oder zusätzliche Verschlüsselungen und/oder Verarbeitungen für jeweilige Übertragungen sind möglich.

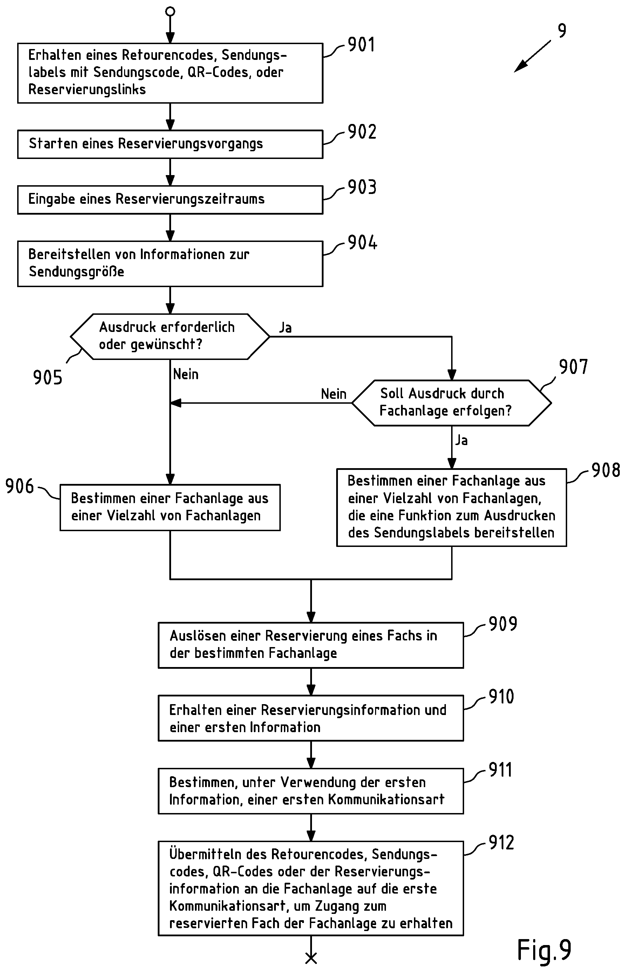

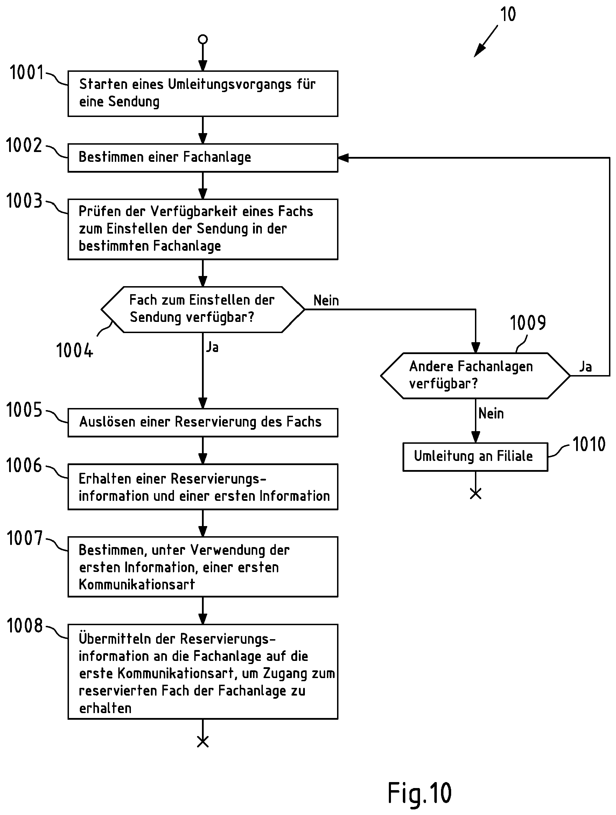

Die oben beschriebenen Ausführungsbeispiele wurden vielfach im Zusammenhang mit Abholvorgängen beschrieben, d.h. die beispielhaften Ausführungsformen der Verfahren gemäß den jeweiligen Aspekten der Erfindung wurden für einen Abholvorgang zumindest einer Sendung aus einem oder mehreren Fächern einer Fachanlage durchgeführt. Verschiedene Ausführungsformen können aber auch einen Einstellvorgang einer Sendung in ein oder mehrere Fächer einer Fachanlage betreffen, wie z.B. nachfolgend mit Bezug auf die Fig. 9 und 10 beschrieben wird.

Fig. 9 zeigt ein Flussdiagramm 9 einer beispielhaften Ausführungsform eines Verfahrens, welches Schritte gemäß einer beispielhaften Ausführungsform des Verfahrens gemäß dem ersten Aspekt der vorliegenden Erfindung umfasst Einige oder alle Schritte des Flussdiagramms 9 können beispielhaft von einer mobilen Vorrichtung durchgeführt werden. Die mobile Vorrichtung ist dabei nachfolgend beispielhaft als Smartphone ausgebildet In anderen Ausführungsformen kann es sich bei der mobilen Vorrichtung aber auch um eine andere Art von mobiler Vorrichtung handeln. Gleiches gilt für den Server, der hier lediglich ein Beispiel für eine Vorrichtung gemäß dem dritten Aspekt der Erfindung ist Zudem können die nachfolgend genannten Schritte auch von einer anderen und/oder von verschiedenen Vorrichtungen und/oder einem System durchgeführt werden.

Ein beispielhaftes Szenario, in dem das Flussdiagramm 9 ganz oder teilweise ausgeführt werden kann, betrifft einen Benutzer, der eine Sendung in ein Fach einer Fachanlage einstellen möchte, z.B. um die Sendung als Retoure an einen Händler zurückzuschicken.

Schritt 901 umfasst ein Erhalten eines Retourencodes, Sendungslabels mit Sendungscode, QR-Codes oder Reservierungslinks. Der Reservierungslink kann beispielsweise in Reaktion auf den Kauf einer (Ver-)Sendung durch einen Benutzer erhalten werden. Der Retourencode und/oder das Sendungslabel mit Sendungscode kann z.B. einer Sendung beigelegen haben, die ein Benutzer erhalten hat, z.B. in Papierform. Der QR-Code kann beispielsweise von einem Händlerserver bereitgestellt werden, um dem Benutzer eine Retoure zu ermöglichen.

Daraufhin kann in Schritt 902 ein Reservierungsvorgang für die Reservierung eines Fach in einer Fachanlage gestartet werden. Das kann beispielsweise durch eine Benutzereingabe in einer App auf einem Smartphone des Benutzers erfolgen und/oder durch das Scannen, Eingeben oder Importieren des zuvor erhaltenen Retourencodes, Sendungslabels, Sendungscodes oder QR-Codes.

Alternativ oder zusätzlich kann der Reservierungsvorgang auf einer Webseite oder durch Aufruf einer Webseite gestartet werden. Die Webseite kann beispielsweise über den zuvor erhaltenen Reservierungslink und/oder über die App auf dem Smartphone erreichbar sein.

Im Reservierungsvorgang wird in Schritt 903 ein Reservierungszeitraum bestimmt, z.B. in der App auf dem Smartphone, z.B. durch eine Benutzereingabe. Beispielsweise will der Benutzer die Sendung in den nächsten 8 Stunden in ein Fach einer Fachanlage einstellen, sodass er einen Reservierungszeitraum von 8 Stunden eingibt.

Im Rahmen des Reservierungsvorgangs können, z.B. auf der Webseite oder in der App, weitere Informationen abgefragt und/oder erhalten und/oder bestimmt werden.

In Schritt 904 werden beispielsweise in der App und/oder auf der Webseite Informationen zur Sendungsgröße der einzustellenden Sendung erfasst. Das Erfassen kann durch eine Benutzereingabe der Maße der Sendung erfolgen. Alternativ oder zusätzlich kann beispielsweise ein Foto der Sendung bereitgestellt werden, dem z.B. mittels Bilderkennung Informationen zur Sendungsgröße entnommen werden können, z.B. durch das Smartphone oder einen Server.

Schritt 905 umfasst ein Feststellen, ob ein Ausdruck z.B. eines Sendungslabels erforderlich und/oder gewünscht ist. Hat der Benutzer beispielsweise bereits ein Sendungslabel mit Sendungscode in Papierform erhalten, ist beispielsweise kein Ausdruck erforderlich oder gewünscht. Die App und/oder der Server können das beispielsweise feststellen, ohne dass dafür eine Benutzereingabe nötig ist, wenn z.B. zuvor das Sendungslabel gescannt wurde. Es kann aber auch durch eine Benutzereingabe erfasst werden, dass ein Benutzer keinen Ausdruck benötigt oder wünscht (Schritt 905: Nein).

In manchen Ausführungsformen kann der Schritt 905 automatisiert erfolgen und es kann beispielsweise basierend darauf, wie der Reservierungsvorgang in Schritt 902 gestartet wurde, entschieden werden, ob ein Ausdruck erforderlich oder gewünscht ist. Wurde z.B. in Schritt 902 ein Reservierungslink verwendet, kann in Schritt 905 entschieden werden, dass ein Sendungslabel zum Aufkleben auf eine Sendung noch erforderlich ist (Schritt 905: Ja). Daraufhin kann der Benutzer in Schritt 907 z.B. durch sein Smartphone aufgefordert werden zu entscheiden, ob das Sendungslabel von der noch zu bestimmenden Fachanlage, in deren Fach er seine Sendung einstellen möchte, ausgedruckt werden soll. Abhängig von der Entscheidung kann dann entweder der Schritt 906 (907: Nein) oder der Schritt 908 (907: Ja) ausgeführt werden.

Die in den Schritten 901-905 erfassten, eingegebenen oder verarbeiteten Daten können von dem Smartphone, auf dem der Benutzer den Start des Reservierungsvorgangs in Schritt 902 ausgelöst und z.B. Daten für die Schritte 903-905 und ggf. 907 eingegeben oder bereitgestellt hat, in oder mit einer Reservierungsanfrage an einen Server geschickt werden. Die Reservierungsanfrage kann also z.B. Informationen umfassen, die in den Schritten 901-905 und/oder 907 erfasst, eingegeben oder verarbeitet wurden. Darüber hinaus kann die Reservierungsanfrage weitere Informationen umfassen, z.B. eine Ortsinformation. Die Ortsinformation kann beispielsweise einen Ort angeben, an dem sich ein Benutzer befindet und/oder in dessen Nähe er die Sendung in ein Fach einer Fachanlage einstellen möchte. Die Reservierungsanfrage kann dabei z.B. auch als Abfolge von Nachrichten ausgebildet sein, sodass die Informationen der Schritte 901 und 905 z.B. nach und nach an den Server geschickt werden. Es ist aber auch möglich, dass eine Reservierungsanfrage und weitere, mit der Reservierungsanfrage in Verbindung stehende Informationen separat, z.B. in verschiedenen Nachrichten, an den Server geschickt werden.

Schritt 906 umfasst das Bestimmen einer Fachanlage aus einer Vielzahl von Fachanlagen. Dieser Schritt kann von unterschiedlichen Entitäten durchgeführt werden.

Der Server verwaltet beispielhaft eine Vielzahl von Fachanlagen und deren Fächer und kennt deren Belegungsstatus. Er kann daher feststellen, welche Fächer in welchen Fachanlagen nicht belegt sind. Der Server kann daher nach Erhalt der Reservierungsanfrage und beispielhaft damit in Verbindung stehenden Informationen zunächst eine Vielzahl von Fachanlagen bestimmen, die z.B. für den Reservierungszeitraum und die Sendungsgröße über ein freies Fach verfügen. Dazu filtert er beispielsweise Daten betreffend von ihm verwaltete Fachanlagen entsprechend den zuvor erhaltenen Informationen. Anschließend kann der Server beispielsweise basierend auf der Ortsinformation diejenige Fachanlage aus der zuvor bestimmten Vielzahl von Fachanlagen bestimmen, die sich am nächsten an dem Ort befindet, der durch die Ortsinformation angezeigt wird. Daraufhin kann der Server z.B. dem Smartphone eine Information über die bestimmte Fachanlage schicken. Je nach Ausführungsform kann dann dem Benutzer z.B. auf dem Smartphone angezeigt werden, welche Fachanlage vom Server bestimmt wurde und der Benutzer kann z.B. der Auswahl zustimmen oder eine andere Fachanlage aus der Vielzahl von Fachanlagen bestimmen.

Alternativ schickt der Server nur die bestimmte Vielzahl von Fachanlagen, die beispielhaft für den Reservierungszeitraum und die Sendungsgröße über ein freies Fach verfügen, an das Smartphone und der Benutzer oder das Smartphone bestimmt eine Fachanlage aus der Vielzahl von Fachanlagen.

Soll durch die Fachanlage auch ein Ausdruck erfolgen, z.B. eines Sendungslabels (Schritt 907: Ja), kann das Filtern der Daten der vom Server verwalteten Fachanlagen zum Bestimmen der Vielzahl von Fachanlagen, aus denen die Fachanlage anschließend bestimmt wird, beispielsweise auch das Filtern danach umfassen, ob eine jeweilige Fachanlage eine Funktion zum Ausdruck eines Sendungslabels bereitstellt. Im Übrigen kann der Schritt 908 wie der Schritt 907 ablaufen.

Schritt 909 umfasst das Auslösen einer Reservierung eines Fachs in der bestimmten Fachanlage. Das Auslösen kann dabei das Erfassen einer Benutzereingabe am Smartphone sein, z.B. die Bestätigung, dass die vom Server bestimmte, vorgeschlagene Fachanlage ausgewählt werden soll, und/oder eine entsprechende Bestätigungsnachricht vom Smartphone an den Server sein.

Der Server kann daraufhin in der bestimmten Fachanlage ein Fach für die zuvor bestimmte Sendungsgröße und den vorbestimmten Reservierungszeitraum reservieren und eine entsprechende Reservierungsinformation bestimmen, die die Reservierung des Fach in der Fachanlage anzeigt. Zudem kann der Server eine Information identifizieren, die anzeigt oder mittels der bestimmbar ist, auf welche erste Kommunikationsart eine Zugangsinformation an die bestimmte Fachanlage übermittelt werden soll, damit der Benutzer Zugang zum reservierten Fach erhalten kann. Das Identifizieren kann dabei z.B. unter Verwendung von (ersten) Informationen in einer Datenbank erfolgen, die z.B. eine Vielzahl von Fachanlagen betreffen.

Der Server kann die Reservierungsinformation und die erste Information, welche vom Smartphone verwendet werden kann, um festzustellen, wie eine Zugangsinformation an die Fachanlage übermittelt werden soll, um Zugang zum reservierten Fach der Fachanlage zu erhalten, dann an das Smartphone des Benutzers verschicken, welches die Informationen erhält (Schritt 910).

Das Smartphone kann beispielsweise in Reaktion auf den Erhalt der Informationen in Schritt 910 oder z.B. nach einer vorbestimmten Benutzereingabe, z.B. in der oben genannten App auf dem Smartphone, den Schritt 911 durchführen. Schritt 911 umfasst das Bestimmen der ersten Kommunikationsart unter Verwendung der in Schritt 910 erhaltenen ersten Information. Beispielhaft kann das Smartphone dabei bestimmen, dass die Übermittlung mittels Anzeige der Zugangsinformation auf einem Bildschirm des Smartphones zur visuellen Erfassung durch den Benutzer erfolgen soll, der die Zugangsinformation dann an einer Eingabeeinheit der Fachanlage, insbesondere einer Tastatur oder einem berührungsempfindlichen Bildschirm, eingibt. Das Smartphone kann den Benutzer daraufhin entsprechend informieren.

Schritt 912 umfasst das Übermitteln des Retourencodes, Sendungscodes, QR-Codes oder der Reservierungsinformation an die Fachanlage auf die erste Kommunikationsart, um Zugang zum reservierten Fach der Fachanlage zu erhalten. Retourencode, Sendungscode, QR-Code oder Reservierungsinformation sind Beispiele für Informationen, die in verschiedenen Ausführungsformen als Zugangsinformation verwendbar sind. Im vorliegenden Ausführungsbeispiel gibt der Benutzer beispielhaft einen Teil der Reservierungsinformation, der auf dem Bildschirm seines Smartphones angezeigt wird, an der Fachanlage ein, in der für ihn ein Fach reserviert ist Die Fachanlage prüft daraufhin, ob die Zugangsinformation (d.h. in diesem Fall der Teil der Reservierungsinformation) zum Zugang zu einem oder mehreren Fächern der Fachanlage berechtigt und gewährt beispielhaft Zugang zum reservierten Fach.

Fig. 10 zeigt ein Flussdiagramm einer weiteren beispielhaften Ausführungsform eines Verfahrens, welches Schritte gemäß einer beispielhaften Ausführungsform des Verfahrens gemäß dem ersten Aspekt der vorliegenden Erfindung umfasst. Einige oder alle Schritte des Flussdiagramms 10 können beispielhaft von einer mobilen Vorrichtung durchgeführt werden. Die mobile Vorrichtung ist dabei nachfolgend beispielhaft als Handscanner eines Zustellers ausgebildet. In anderen Ausführungsformen kann es sich bei der mobilen Vorrichtung aber auch um eine andere Art von mobiler Vorrichtung handeln. Gleiches gilt für den Server, der hier lediglich ein Beispiel für eine Vorrichtung gemäß dem dritten Aspekt der Erfindung ist Zudem können die nachfolgend genannten Schritte auch von einer anderen und/oder von verschiedenen Vorrichtungen und/oder einem System durchgeführt werden.

Ein beispielhaftes Szenario, in dem das Flussdiagramm 10 ganz oder teilweise ausgeführt werden kann, betrifft einen Zusteller, der eine Sendung in ein Fach einer Fachanlage einstellen möchte, z.B. weil einer Haustürzustellung nicht erfolgreich war.

Schritt 1001 umfasst das Starten eines Umleitungsvorgangs für eine Sendung, z.B. weil die Sendung nicht an der Empfängeradresse zugestellt werden konnte. Der Umleitungsvorgang kann dabei z.B. gestartet werden, indem der Zusteller auf seinem Handscanner eine entsprechende Benutzereingabe tätigt Der Umleitungsvorgang kann dann beispielsweise am Handscanner, z.B. im Austausch von Informationen mit dem Server, ablaufen oder der Handscanner kann beispielsweise eine Umleitungsanfrage an einen Server schicken, wo der Umleitungsvorgang, z.B. im Austausch von Informationen mit dem Handscanner, abläuft.

Schritt 1002 umfasst das Bestimmen einer Fachanlage. Der Schritt 1002 kann dabei ähnlich ablaufen, wie es zu den Schritten 906/908 im Flussdiagramm 9 beschrieben wurde und er kann vom Handscanner und/oder dem Server (ggf. unter Mitwirkung des Zustellers) durchgeführt werden. In verschiedenen Ausführungsformen kann der Schritt 1002 allerdings auch anders funktionieren als der Schritt 906.

Beispielhaft wird in diesem Ausführungsbeispiel eine Fachanlage am Handscanner bestimmt, z.B. durch das Erfassen einer Benutzereingabe, die z.B. eine Fachanlagenkennung betrifft oder einer Auswahl auf einer Karte anzeigt. Auf diese Weise kann der Zusteller beispielsweise auswählen, in welche Fachanlage er die Sendung einstellen will.

Schritt 1003 umfasst das Prüfen der Verfügbarkeit eines Fachs zum Einstellen der Sendung in der bestimmten Fachanlage. Der Schritt 1003 kann beispielsweise im Anschluss an das Bestimmen der Fachanlage erfolgen. Ausgelöst wird der Schritt beispielsweise dadurch, dass der Handscanner eine entsprechende Reservierungsanfrage für ein Fach in der bestimmten Fachanlage an den Server sendet. Die Reservierungsanfrage kann dabei so ausgebildet sein, wie es im Ausführungsbeispiel zur Fig. 9 beschrieben wurde. Insbesondere kann sie z.B. Informationen wie eine Sendungsgröße umfassen oder solche Informationen können neben der Reservierungsanfrage an den Server gesendet werden. Der Server kann daraufhin prüfen, ob ein Fach, dass die Anfordernisse, z.B. betreffend die Sendungsgröße, erfüllt, zum Einstellen verfügbar ist. Verfügbar ist es beispielsweise dann, wenn es nicht reserviert oder belegt ist.

Ist kein Fach zum Einstellen der Sendung in der bestimmten Fachanlage verfügbar (Schritt 1004: Nein), wird in Schritt 1009 geprüft, ob andere Fachanlagen verfügbar sind. Verfügbar kann dabei z.B. heißen, dass es Fachanlagen in einem vorbestimmten Radius um einen Ort, z.B. dem Aufenthaltsort des Zustellers, oder in einem vorbestimmten Bereich, z.B. dem Bezirk eines Zustellers, gibt. Ist das der Fall (Schritt 1009: Ja), kann beispielsweise eine andere Fachanlage bestimmt werden, z.B. unter Verwendung des Handscanner des Zustellers und die Schritte ab Schritt 1002 können ausgeführt werden. Ist keine andere Fachanlage verfügbar (Schritt 1009: Nein), wird die Sendung beispielsweise in Schritt 1010 an eine Filiale umgeleitet, von wo sie der Sendungsempfänger abholen kann.

Ist ein Fach zum Einstellen der Sendung in der bestimmten Fachanlage verfügbar (Schritt 1004: Ja), kann das der Auslöser für die Reservierung eines Fachs in Schritt 1005 sein. Alternativ kann z.B. eine Mitteilung vom Handscanner des Zustellers zum Server, mit der bestätigt wird, dass der Zusteller das verfügbare Fach zum Einstellen der Sendung nutzen möchte, ein Auslöser für die Reservierung gemäß Schritt 1005 sein.

Im Übrigen können die Schritte 1005-1008 so ablaufen, wie es für die Schritte 909-912 im Flussdiagramm 9 beschrieben wurde. Insbesondere kann der Handscanner also unter Verwendung der ersten Information die erste Kommunikationsart in Schritt 1007 bestimmen. Dabei kann z.B. auch eine Beschaffenheit des Handscanners (d.h. der mobilen Vorrichtung) und/oder Benutzereingaben z.B. des Zustellers berücksichtigt werden. Dabei kann das in Bezug auf die Schritt 909-912 beschriebene Smartphone durch den oben beschriebenen Handscanner ersetzt werden.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. Alle Offenbarungen in dieser Spezifikation sind im Hinblick auf alle Kategorien Vorrichtung, Verfahren, Computerprogramm zu verstehen, sodass beispielsweise mit der Beschreibung eines Verfahrensschritt auch eine entsprechende Vorrichtung offenbart ist, die Mittel zur Ausführung und/oder Steuerung des Verfahrensschritts umfasst, und eine entsprechende Vorrichtung, die dazu eingerichtet ist den Verfahrensschritt zu steuern und/oder auszuführen.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, beispielsweise ausgeführt von einer mobilen Vorrichtung, das Verfahren umfassend:
- Erhalten einer ersten Information von einer Vorrichtung oder einem System, wobei unter Verwendung der ersten Information eine erste Kommunikationsart zur Übermittlung einer Zugangsinformation an eine Fachanlage bestimmbar ist (201);
- Bestimmen, unter Verwendung der ersten Information, der ersten Kommunikationsart zur Übermittlung der Zugangsinformation an die Fachanlage (202); und
- Übermitteln der Zugangsinformation an die Fachanlage auf die erste Kommunikationsart, um Zugang zu einem oder mehreren Fächern der Fachanlage zu erhalten (203).

2. Das Verfahren nach Anspruch 1, wobei das Bestimmen der ersten Kommunikationsart das Auswählen der ersten Kommunikationsart aus einer Vielzahl von Kommunikationsarten umfasst.

3. Das Verfahren nach einem der vorhergehenden Ansprüche, wobei die erste Kommunikationsart eine der Kommunikationsarten (i)-(iv) ist:
(i) eine Übermittlung mittels einer Funkverbindung, insbesondere Bluetooth oder NFC;
(ii) eine Übermittlung mittels eines optischen Musters, welches auf einem Bildschirm der mobilen Vorrichtung angezeigt wird zur Erfassung durch eine Erfassungseinheit der Fachanlage;
(iii) eine Übermittlung mittels Anzeige der Zugangsinformation auf einem Bildschirm der mobilen Vorrichtung zur visuellen Erfassung durch eine Person, die die Zugangsinformation dann an einer Eingabeeinheit der Fachanlage, insbesondere einer Tastatur oder einem berührungsempfindlichen Bildschirm, eingibt; oder
(iv) eine akustische Übermittlung, beispielsweise indem eine Vorrichtung oder Person die Zugangsinformation vorliest und die Fachanlage die Zugangsinformation mittels Spracherkennung erfasst.

4. Das Verfahren nach einem der vorhergehenden Ansprüche, ferner umfassend:
- Erhalten einer zweiten Information, die als die Zugangsinformation verwendbar ist oder die zur Erzeugung der Zugangsinformation erforderlich ist

5. Das Verfahren nach Anspruch 4, wobei die mobile Vorrichtung die erste und die zweite Information von derselben Vorrichtung oder demselben System erhält, und wobei zum Beispiel das Erhalten der ersten Information und das Erhalten der zweiten Information durch dasselbe Ereignis ausgelöst werden.

6. Das Verfahren nach einem der vorhergehenden Ansprüche, ferner umfassend:
- Übermitteln einer Reservierungsanfrage an eine Vorrichtung, die eine Reservierungsinformation bestimmen kann;
- Erhalten der Reservierungsinformation, wobei die Reservierungsinformation eine Reservierung des einen oder der mehreren Fächer der Fachanlage anzeigt, zu dem oder zu denen mit dem Übermitteln der Zugangsinformation Zugang erhalten werden soll, und wobei die Reservierungsinformation zum Beispiel in Reaktion auf das Übermitteln der Reservierungsanfrage erhalten wird.

7. Verfahren, beispielsweise ausgeführt von einer Fachanlage, das Verfahren umfassend:
- Ausgeben einer ersten Information an eine Vorrichtung oder ein System, welche oder welches die erste Information an eine mobile Vorrichtung übermittelt, um der mobilen Vorrichtung zu ermöglichen unter Verwendung der ersten Information eine erste Kommunikationsart zur Übermittlung einer Zugangsinformation an die Fachanlage zu bestimmen;
- Erhalten der Zugangsinformation auf die erste Kommunikationsart, wobei die erste Kommunikationsart unter Verwendung der ersten Information bestimmt wurde;
- Feststellen, ob die Zugangsinformation zum Zugang zu einem oder mehreren Fächern der Fachanlage berechtigt; und
- Gewähren von Zugang zu einem oder mehreren Fächern der Fachanlage, wobei notwendige Bedingung für das Gewähren von Zugang ist, dass festgestellt wurde, dass die Zugangsinformation zum Zugang zu dem einen oder zu den mehreren Fächern der Fachanlage berechtigt

8. Verfahren, beispielsweise ausgeführt von einer Vorrichtung oder einem System, das Verfahren umfassend:
- Erhalten oder Speichern einer ersten Information, wobei unter Verwendung der ersten Information eine erste Kommunikationsart zur Übermittlung einer Zugangsinformation an eine Fachanlage bestimmbar ist;
- Übermitteln der ersten Information an eine mobile Vorrichtung, um der mobilen Vorrichtung zu ermöglichen unter Verwendung der ersten Information die erste Kommunikationsart zur Übermittlung der Zugangsinformation an die Fachanlage zu bestimmen.

9. Das Verfahren nach Anspruch 8, ferner umfassend:
- Erhalten einer Einstellinformation von der Fachanlage;
- Feststellen, unter Verwendung der Einstellinformation, dass eine Sendung in ein Fach der Fachanlage eingestellt wurde, wobei das Feststellen, dass eine Sendung in ein Fach der Fachanlage eingestellt wurde, ein Auslöser für das Übermitteln der ersten Information an die mobile Vorrichtung ist

10. Das Verfahren nach einem der Ansprüche 8-9, wobei die Zugangsinformation von der mobilen Vorrichtung an die Fachanlage übermittelt wird, um Zugang zu einem oder mehreren Fächern der Fachanlage zu erhalten, das Verfahren ferner umfassend:
- Erhalten oder Bestimmen einer zweiten Information, die als die Zugangsinformation verwendbar ist oder die zur Erzeugung der Zugangsinformation erforderlich ist;
- Übermitteln der zweiten Information an die mobile Vorrichtung, wobei zum Beispiel das Übermitteln der ersten Information und das Übermitteln der zweiten Information durch dasselbe Ereignis ausgelöst werden.

11. Das Verfahren nach einem der Ansprüche 8-9, ferner umfassend:
- Erhalten einer Reservierungsanfrage von der mobilen Vorrichtung;
- Bestimmen einer Reservierungsinformation, wobei die Reservierungsinformation eine Reservierung eines oder mehrerer Fächer der Fachanlage anzeigt, und wobei das Bestimmen zum Beispiel in Reaktion auf den Erhalt der Reservierungsanfrage erfolgt;
- Übermitteln der Reservierungsinformation an die mobile Vorrichtung, wobei zum Beispiel das Übermitteln der Reservierungsinformation und das Übermitteln der ersten Information durch dasselbe Ereignis ausgelöst werden.

12. Das Verfahren nach einem der vorhergehenden Ansprüche, wobei die erste Information eine Beschaffenheitsinformation ist, die mit einer Beschaffenheit der Fachanlage assoziiert ist.

13. Das Verfahren nach Anspruch 12, wobei die Beschaffenheitsinformation mit einem oder mehreren Beschaffenheitsmerkmalen a), b) oder c) der Fachanlage assoziiert ist:
a) der Verfügbarkeit einer Funkkommunikationsschnittstelle an der Fachanlage,
b) der Verfügbarkeit einer Erfassungseinheit, z.B. einer optischen und/oder akustischen Erfassungseinheit, an der Fachanlage,
c) der Verfügbarkeit einer Eingabeeinheit, z.B. eines berührungsempfindlichen Bildschirms oder einer Tastatur, an der Fachanlage.

14. Das Verfahren nach einem der vorhergehenden Ansprüche, wobei die erste Information eine Typinformation ist, sodass die erste Information einen Typ der Fachanlage anzeigt oder sodass unter Verwendung der ersten Information der Typ der Fachanlage bestimmbar ist.

15. Vorrichtung oder System aus zumindest zwei Vorrichtungen, wobei die Vorrichtung beziehungsweise das System zur Ausführung und/oder Steuerung des Verfahrens nach einem der Ansprüche 1-14 eingerichtet ist oder jeweilige Mittel zur Ausführung und/oder Steuerung der Schritte des Verfahrens nach einem der Ansprüche 1-14 umfasst.

## Claims

1. Method, for example performed by a mobile device, the method comprising:
- receiving first information from a device or a system, wherein, using the first information, a first communication type for transmitting access information to a locker system can be determined (201);
- determining, using the first information, the first communication type for transmitting the access information to the locker system (202); and
- transmitting the access information to the locker system using the first communication type in order to obtain access to one or more compartments of the locker system (203).

2. The method according to claim 1, wherein determining the first communication type comprises selecting the first communication type from a plurality of communication types.

3. The method according to any one of the preceding claims, wherein the first communication type is one of communication types (i)-(iv):
(i) transmission by means of a radio connection, in particular Bluetooth or NFC;
(ii) transmission by means of an optical pattern which is displayed on a screen of the mobile device for capture by a capture unit of the locker system;
(iii) transmission by means of displaying the access information on a screen of the mobile device for visual capture by a person, who then enters the access information at an input unit of the locker system, in particular a keyboard or a touch-sensitive screen; or
(iv) acoustic transmission, for example in that a device or person reads out the access information and the locker system captures the access information by means of speech recognition.

4. The method according to any one of the preceding claims, further comprising:
- receiving second information which is usable as the access information or which is required for generating the access information.

5. The method according to claim 4, wherein the mobile device receives the first and the second information from the same device or the same system, and wherein, for example, receiving the first information and receiving the second information are triggered by the same event.

6. The method according to any one of the preceding claims, further comprising:
- transmitting a reservation request to a device which can determine reservation information;
- receiving the reservation information, wherein the reservation information indicates a reservation of the one or more compartments of the locker system to which access is to be obtained by transmitting the access information, and wherein the reservation information is received, for example, in response to transmitting the reservation request.

7. Method, for example performed by a locker system, the method comprising:
- outputting first information to a device or a system which transmits the first information to a mobile device in order to enable the mobile device, using the first information, to determine a first communication type for transmitting access information to the locker system;
- receiving the access information using the first communication type, wherein the first communication type was determined using the first information;
- determining whether the access information authorizes access to one or more compartments of the locker system; and
- granting access to one or more compartments of the locker system, wherein a necessary condition for granting access is that it has been determined that the access information authorizes access to the one or more compartments of the locker system.

8. Method, for example performed by a device or a system, the method comprising:
- receiving or storing first information, wherein, using the first information, a first communication type for transmitting access information to a locker system can be determined;
- transmitting the first information to a mobile device in order to enable the mobile device, using the first information, to determine the first communication type for transmitting the access information to the locker system.

9. The method according to claim 8, further comprising:
- receiving deposit information from the locker system;
- determining, using the deposit information, that an item has been deposited in a compartment of the locker system, wherein the determining that an item has been deposited in a compartment of the locker system is a trigger for transmitting the first information to the mobile device.

10. The method according to any one of claims 8-9, wherein the access information is transmitted from the mobile device to the locker system in order to obtain access to one or more compartments of the locker system, the method further comprising:
- receiving or determining second information which is usable as the access information or which is required for generating the access information;
- transmitting the second information to the mobile device, wherein, for example, transmitting the first information and transmitting the second information are triggered by the same event.

11. The method according to any one of claims 8-9, further comprising:
- receiving a reservation request from the mobile device;
- determining reservation information, wherein the reservation information indicates a reservation of one or more compartments of the locker system, and wherein the determining is performed, for example, in response to receipt of the reservation request;
- transmitting the reservation information to the mobile device, wherein, for example, transmitting the reservation information and transmitting the first information are triggered by the same event.

12. The method according to any one of the preceding claims, wherein the first information is configuration information which is associated with a configuration of the locker system.

13. The method according to claim 12, wherein the configuration information is associated with one or more configuration features a), b) or c) of the locker system:
a) the availability of a radio communication interface at the locker system,
b) the availability of a capture unit, e.g. an optical and/or acoustic capture unit, at the locker system,
c) the availability of an input unit, e.g. a touch-sensitive screen or a keyboard, at the locker system.

14. The method according to any one of the preceding claims, wherein the first information is type information, such that the first information indicates a type of the locker system or such that the type of the locker system can be determined using the first information.

15. Apparatus or system consisting of at least two apparatuses, wherein the apparatus or the system is configured to perform and/or control the method according to any one of claims 1-14 or comprises respective means for performing and/or controlling the steps of the method according to any one of claims 1-14.

## Revendications

1. Procédé, par exemple exécuté par un dispositif mobile, le procédé comprenant :
- la réception d'une première information en provenance d'un dispositif ou d'un système, une première sorte de communication destinée à transmettre une information d'accès à une installation à casiers pouvant être déterminée en utilisant la première information (201) ;
- la détermination, en utilisant la première information, de la première sorte de communication destinée à transmettre l'information d'accès à l'installation à casiers (202) ; et
- la transmission de l'information d'accès à l'installation à casiers selon la première sorte de communication, afin d'obtenir un accès à un ou plusieurs casiers de l'installation à casiers (203).

2. Procédé selon la revendication 1, dans lequel la détermination de la première sorte de communication comprend la sélection de la première sorte de communication parmi une pluralité de sortes de communication.

3. Procédé selon l'une des revendications précédentes, dans lequel la première sorte de communication est l'une des sortes de communication (i)-(iv) :
(i) une transmission au moyen d'une liaison radio, en particulier Bluetooth ou NFC ;
(ii) une transmission au moyen d'un motif optique qui est affiché sur un écran du dispositif mobile pour être acquis par une unité d'acquisition de l'installation à casiers ;
(iii) une transmission au moyen de l'affichage de l'information d'accès sur un écran du dispositif mobile pour acquisition visuelle par une personne qui saisit ensuite l'information d'accès au niveau d'une unité de saisie de l'installation à casiers, en particulier un clavier ou un écran tactile ; ou
(iv) une transmission acoustique, par exemple en ce qu'un dispositif ou une personne lit à haute voix l'information d'accès et l'installation à casiers acquiert l'information d'accès au moyen d'une reconnaissance vocale.

4. Procédé selon l'une des revendications précédentes, comprenant en outre :
- la réception d'une deuxième information qui peut être utilisée comme information d'accès ou qui est nécessaire pour générer l'information d'accès.

5. Procédé selon la revendication 4, dans lequel le dispositif mobile reçoit la première et la deuxième information du même dispositif ou du même système, et dans lequel, par exemple, la réception de la première information et la réception de la deuxième information sont déclenchées par le même événement.

6. Procédé selon l'une des revendications précédentes, comprenant en outre :
- la transmission d'une requête de réservation à un dispositif qui peut déterminer une information de réservation ;
- la réception de l'information de réservation, l'information de réservation indiquant une réservation de l'un ou des plusieurs casiers de l'installation à casiers auxquels l'accès doit être obtenu par la transmission de l'information d'accès, et l'information de réservation étant reçue par exemple en réaction à la transmission de la requête de réservation.

7. Procédé, par exemple exécuté par une installation à casiers, le procédé comprenant :
- l'émission d'une première information à destination d'un dispositif ou d'un système qui transmet la première information à un dispositif mobile afin de permettre au dispositif mobile, en utilisant la première information, de déterminer une première sorte de communication destinée à transmettre une information d'accès à l'installation à casiers ;
- la réception de l'information d'accès selon la première sorte de communication, la première sorte de communication ayant été déterminée en utilisant la première information ;
- la constatation que l'information d'accès autorise ou non l'accès à un ou plusieurs casiers de l'installation à casiers ; et
- l'octroi d'un accès à un ou plusieurs casiers de l'installation à casiers, une condition nécessaire à l'octroi d'un accès étant qu'il ait été constaté que l'information d'accès autorise l'accès audit un ou auxdits plusieurs casiers de l'installation à casiers.

8. Procédé, par exemple exécuté par un dispositif ou un système, le procédé comprenant :
- la réception ou l'enregistrement d'une première information, une première sorte de communication destinée à transmettre une information d'accès à une installation à casiers pouvant être déterminée en utilisant la première information ;
- la transmission de la première information à un dispositif mobile afin de permettre au dispositif mobile, en utilisant la première information, de déterminer la première sorte de communication destinée à transmettre l'information d'accès à l'installation à casiers.

9. Procédé selon la revendication 8, comprenant en outre :
- la réception d'une information de dépôt en provenance de l'installation à casiers ;
- la constatation, en utilisant l'information de dépôt, qu'un envoi a été déposé dans un casier de l'installation à casiers, la constatation qu'un envoi a été déposé dans un casier de l'installation à casiers constituant un déclencheur pour la transmission de la première information au dispositif mobile.

10. Procédé selon l'une des revendications 8-9, dans lequel l'information d'accès est transmise du dispositif mobile à l'installation à casiers afin d'obtenir un accès à un ou plusieurs casiers de l'installation à casiers, le procédé comprenant en outre :
- la réception ou la détermination d'une deuxième information qui peut être utilisée comme information d'accès ou qui est nécessaire pour générer l'information d'accès ;
- la transmission de la deuxième information au dispositif mobile, la transmission de la première information et la transmission de la deuxième information étant par exemple déclenchées par le même événement.

11. Procédé selon l'une des revendications 8-9, comprenant en outre :
- la réception d'une requête de réservation en provenance du dispositif mobile ;
- la détermination d'une information de réservation, l'information de réservation indiquant une réservation d'un ou de plusieurs casiers de l'installation à casiers, et la détermination étant par exemple effectuée en réaction à la réception de la requête de réservation ;
- la transmission de l'information de réservation au dispositif mobile, la transmission de l'information de réservation et la transmission de la première information étant par exemple déclenchées par le même événement.

12. Procédé selon l'une des revendications précédentes, dans lequel la première information est une information de configuration qui est associée à une configuration de l'installation à casiers.

13. Procédé selon la revendication 12, dans lequel l'information de configuration est associée à une ou plusieurs caractéristiques de configuration a), b) ou c) de l'installation à casiers :
a) la disponibilité d'une interface de communication radio au niveau de l'installation à casiers,
b) la disponibilité d'une unité d'acquisition, par exemple une unité d'acquisition optique et/ou acoustique, au niveau de l'installation à casiers,
c) la disponibilité d'une unité de saisie, par exemple un écran tactile ou un clavier, au niveau de l'installation à casiers.

14. Procédé selon l'une des revendications précédentes, dans lequel la première information est une information de type, de telle sorte que la première information indique un type de l'installation à casiers ou de telle sorte que le type de l'installation à casiers peut être déterminé en utilisant la première information.

15. Dispositif ou système constitué d'au moins deux dispositifs, le dispositif ou le système étant configuré pour exécuter et/ou commander le procédé selon l'une des revendications 1-14 ou comprenant des moyens respectifs pour exécuter et/ou commander les étapes du procédé selon l'une des revendications 1-14.
